# EUROPÄISCHE PATENTANMELDUNG

(11) **EP 1 236 968 A2**
(43) Veröffentlichungstag der Anmeldung: **04.09.2002**
(21) Anmeldenummer: 02003367.6
(22) Anmeldetag: 13.02.2002
(51) Int. Cl.: G01B 7/04

(54) **Magnetische Längenmessvorrichtung**

(30) Priorität: 13.02.2001 DE 10106479; 15.05.2001 DE 10123539
(71) Anmelder: ASM AUTOMATION, SENSORIK, MESSTECHNIK GMBH, D-85452 Moosinning (DE)
(72) Erfinder: Steinich, Klaus-Manfred, 85604 Poering-Zorneding (DE); Wirth, Peter, 85386 Eching (DE)
(74) Vertreter: Müller, Gerald Christian

(57) **Zusammenfassung**

Längenmessvorrichtungen, bei denen die Teilung auf dem Maßstab (1) in einer unterschiedlichen Magnetisierung besteht, welche mittels einer Sensoreinheit (2) abgetastet wird, sind hinsichtlich der gebotenen Auflösung nachträglich einstellbar. Im Sinne einer verbesserten Einsetzbarkeit ist diese sog. Interpolatorschaltung (9b) nicht in einem separaten, von der beweglichen Sensoreinheit (2) getrennten, fest montierten Gehäuse untergebracht, sondern direkt innerhalb der Sensoreinheit (2).

## Beschreibung

### I. Anwendungsgebiet

Die Erfindung betrifft eine Längenmessvorrichtung.

### II. Technischer Hintergrund

Angeordnet auf dem Umfang eines Zylinders, kann eine solche Längenmessvorrichtung natürlich grundsätzlich auch zur Winkelmessung verwendet werden.

Die Längenmessvorrichtung umfasst einerseits einen Maßstab, auf dem die Längeneinheiten aufgetragen sind, sowie eine Sensoreinheit, die in Messrichtung relativ zum Maßstab bewegt wird. In der Regel wird dabei registriert, wie viele Längeneinheiten bei dieser Relativbewegung seitens der Sensoreinheit zurückgelegt, also ganz oder teilweise überlaufen, wurden. Die Absolutposition am Ende der Relativbewegung kann nur unter Kenntnis der Startposition vor der Relativbewegung berechnet werden.

Zu diesem Zweck weist der gerade oder gekrümmte Maßstab nur in einer einzigen Spur oder in mehreren Spuren nebeneinander, in Messrichtung hintereinander jeweils Codierungen, meist gleichmäßige und periodische Codierungen, auf, wobei der Teilungsabstand von Spur zu Spur unterschiedlich ist. Zusätzlich ist entlang der Messstrecke, in der Regel meist nur an einer einzigen Längsposition, eine Referenzmarke vorhanden, deren Position die absolute Nulllage darstellt, und welche somit für eine Inbetriebsetzung der Vorrichtung zunächst einmal überfahren werden muss, um einen absoluten Startwert vorzugeben.

Daneben sind jedoch auch absolut messende Längenmessvorrichtungen bekannt. Dabei ist durch Auslegung der Maßstabseinteilungen und das Auswerteverfahren zum Beispiel durch nur einmaliges Aufsetzen des Sensors an einer beliebigen Stelle des Maßstabes unmittelbar die Absolutlage des Sensors auf dem Maßstab ermittelbar, ohne Relativverfahrung des Sensors gegenüber dem Maßstab und ohne zunächst erforderliches Anfahren eines Referenzpunktes auf dem Maßstab.

Unabhängig davon, ob es sich um ein inkrementales oder um ein absolutes Längenmesssystem handelt, umfasst die erfindungsgemäße Messvorrichtung einen oder mehrere oder eine Vielzahl von Magneten, die die Modulation des zu detektierenden Signales bewirken. Z.B. sind auf dem Maßstab die einzelnen Längeneinheiten in Form unterschiedlicher Magnete bzw. Magnetisierungen in Messrichtung hintereinander aufgetragen, beispielsweise als in Messrichtung jeweils gleich lange abwechselnd gepolte Segmente.

Die relativ dazu in Messrichtung bewegte Sensoreinheit, die neben dem eigentlichen Sensor in der Regel bereits wenigstens Teile der Auswerteelektronik enthält, detektiert das in Messrichtung sich ständig ändernde Magnetfeld als analoges Signal in Form einer Sinusschwingung bzw. einer sinusähnlichen, jedoch gleichmäßigen, Schwingung. Ein wesentlicher Vorteil dieser Methode ist die Tatsache, dass der Sensor im Abstand, also berührungslos, zu dem Maßstab geführt werden kann. Der Maßstab und auch der Sensor unterliegen damit keinem mechanischen Verschleiß. Zusätzlich muss auch die Parallelität der Führung des Sensor zu der Verlaufsrichtung des Maßstabes nur beschränkt gegeben sein.

Insbesondere darf sich der Abstand zwischen Sensor und Maßstab, der bei etwa 1,0 mm liegen soll, auch etwas ändern.

Dabei kann eine separate Referenz-Spur, die primär nur die (singuläre) Referenz Marke trägt, durch eine definierte Magnetisierung auch über den Rest ihrer Länge dazu beitragen, dass auch ein etwas größerer Abstand zwischen Sensor und Maßstab durch die Vorrichtung noch verkraftbar wird. Dies ist insbesondere möglich, indem die (analoge) Ausgangs-Spannung des Referenz-Sensors nicht mehr nach ihrer Amplitude, sondern nach ihrem Vorzeichen ausgewertet wird, zum Beispiel mittels eines Amplitudendiskriminators mit einer Schaltschwelle von 0 Volt oder dem Mittelwert der analogen Referenz-Spannung.

Die Elektronik zum Auswerten der Messsignale umfasst einerseits einen Wandler, um das periodische analoge Signal, etwa eine Sinusschwingung, in ein periodisches digitales Signal, beispielsweise ein Rechtecksignal, umzuwandeln.

Dabei muss eine Sinusschwingung nicht unbedingt einem Rechtecksignal entsprechen: da die Form des analogen Signales bekannt ist, kann durch genauere Auswertung des analogen Signales, beispielsweise den momentanen Absolutwert, die Relativposition in Messrichtung innerhalb einer Periode des analogen Signales ermittelt werden. Ein Interpolator, in der Regel in Form einer elektronischen Schaltung, beispielsweise aufgrund der vorbeschriebenen Methode, bewirkt, dass das erhaltene z.B. periodische digitale Signal kleinere Teilungsabstände aufweist als das z.B. periodische analoge Ausgangssignal, also die Auflösung des digitalen Signales wesentlich höher ist. Der Faktor der höheren Auflösung ist dabei am Interpolator einstellbar, und wenn der Interpolator in Form einer programmierbaren Schaltung vorliegt, mittels Umprogrammierung bzw. Neuprogrammierung einstellbar.

Meist der Wandeler dabei im Interpolator schaltungstechnisch und/oder körperlich integriert.

Ebenso können weitere Parameter, beispielsweise Korrekturfaktoren zur Korrektur der Kennlinien der Elektronik, Korrekturfaktoren zum Einstellen von Nullpunkt und/oder Verstärkung der Elektronik oder einzelner Baugruppen der Elektronik, Korrekturfaktoren zur Einstellung der Lage des Referenzpunktes innerhalb einer Teilung des Maßstabes ebenfalls am Interpolator eingestellt und insbesondere umprogrammiert werden.

Die Elektronik umfaßt auch eine Leitungstreiberschaltung, die wie üblich der Verbesserung der Übertragungsfähigkeit des Ausgabe-Signales dient, beispielsweise durch Verringern der Impedanzen.

Die Elektronik umfaßt weiterhin eine Schutzbeschaltung, die die gesamte Elektronik oder zumindest Teile davon vor zu hohen Spannungen und/oder zu hohen Strömen schützt, wie sie beispielsweise durch falsche Polung an der Ausgabeeinheit auftreten können.

In der Regel weist die Elektronik an ihren peripheren Verbindungen zur Umgebung in den Leiterbahnen innere Knotenpunkte auf, die mit den elektronischen Bauelementen der Elektronik verbunden sind, und äußere Knotenpunkte, die mit dem Anschlußkabel der Ausgabeeinheit, der Stromversorgung und allen weiteren von außen zugänglichen Kontaktpunkten, etwa der Kontaktiereinheit, zum Programmieren des Interpolators, verbunden sind.

Die Schutzbeschaltung befindet sich dabei zwischen den inneren und äußeren Knotenpunkten, und kann im vorliegenden Fall durchaus baulicher Bestandteil eines Spannungsreglers und/oder des Interpolators und/oder der Leitungstreiberschaltung sein.

Die Schutzbeschaltung, ein Teil der Schutzbeschaltung oder auch Spannungsregler, Interplator und Leitungstreiber können im Gehäuse des Anschlußsteckers (=Ausgabeeinheit) des Sensors untergebracht sein.

Die Schutzbeschaltung bewirkt ein Begrenzen der elektrischen Ströme in den Leitern zu und von der Elektronik sowie ein Ableiten zu hoher Spannungen in diesen Leitern, beispielsweise durch Verwendung strombegrenzender Impedanzen (Ohmsche Widerstände oder frequenzabhängig absorptiv durch Ferritdrosseln, frequenzabhängig reflektiv durch Induktivitäten oder stromabhängig durch PTC-Widerstände oder integriert als stromabhängige Begrenzung in der Ausgangsstufe des Leistungstreibers) und/oder spannungsbegrenzende Bauelemente (z. B. Kaptioden, insbesondere im Leitungstreiber integriert, Ableitdioden, Varistoren).

Denn von der Ausgangsseite, also über die Ausgabeeinheit, können unter Umständen leitungsgebundene Störspannungen über einen weiten Frequenz- und Amplitudenbereich eindringen und an die Sensoreinheit gelangen. Die Schutzbeschaltung schützt dabei mit ihren strom- und/oder spannungsbegrenzenden Bauelementen zum einen vor der Zerstörung von Teilen der Elektronik durch vor allem impulsförmige Ströme und/oder Überspannungen mit hohen Amplituden, und zum anderen schützt sie mit Hilfe der absorbtiv/reflektiv und frequenzabhängig filternden Bauelemente vor einer Störung der Meßgenauigkeit und Funktionssicherheit der Elektronik der Sensoreinheit durch vor allem hochfrequente Störspannungen. Ein weiterer Vorteil der Schutzbeschaltung ist auch darin zu sehen, daß anstelle von teuren geschirmten Kabeln auch einfachere und sogar ungeschirmte Kabel zum Einsatz kommen können.

Die Elektronik umfasst ferner eine Ausgabeeinheit, um dieses digitale und in der Regel hochauflösende, digitale Signal ausgeben zu können, sei es an eine Anzeigeeinheit, zum Beispiel eine Digitalanzeige, oder sei es zur Weiterverarbeitung an eine Maschinensteuerung.

In der Regel ist zu diesem Zweck an der Sensoreinheit ein Kabel fest angeordnet, an dessen Ende ein Stecker als Ausgabeeinheit angeordnet ist.

Um eine solche Messvorrichtung möglichst vielseitig an unterschiedlichsten Maschinen und Anlagen verwenden zu können, ist neben einer möglichst hohen Unempfindlichkeit gegenüber physikalischen und chemischen Einflussfaktoren auch eine möglichst geringe bauliche Abmessung sowohl des Maßstabes als auch der Sensoreinheit anzustreben.

Der Maßstab besteht dabei in der Regel aus einem Magnetband von 1 ― 2 mm Dicke und ca. 1 cm Breite, welches flexibel ist und mittels selbstklebender Beschichtung oder Doppelklebeband direkt auf einer Maschine, aber auch auf einer eine ausreichende Ebenheit ermöglichenden Profilschiene aufgeklebt wird und als mechanischem Schutz mit einem Edelstahlblech, welches nicht magnetisierbar ist, abgedeckt ist.

Bei der Sensoreinheit kommt es vor allem auf geringe Baugröße an. Insbesondere sollte die Sensoreinheit nicht breiter sein als der Maßstab. Auch sollte die Sensoreinheit in Messrichtung nicht unbegrenzt über die Position des ― in Messrichtung meist sehr kurzen, nur einige Millimeter langen eigentlichen Sensors ― hinausragen, da dieser Überstand ja eine Überlänge des Maßstabes über die zu messende Strecke hinaus bedingt.

Dagegen ist die Ausdehnung der Sensoreinheit in Richtung lotrecht zur Ebene des Maßstabes hinaus weniger kritisch.

Dabei ist es üblich, die in der beweglichen Sensoreinheit angeordneten Teile, insbesondere die dort angeordneten Teile der Elektronik, durch ein umgebendes festes Gehäuse und/oder Eingießen in Kunststoff zu schützen.

Sofern der Faktor, um den das digitale Signal eine höhere Auflösung aufwies als das zugrundeliegende analoge Signal, also die Teilung des Maßstabes, nachträglich einstellbar, beispielsweise mittels Programmierung einstellbar, sein sollte, was insbesondere bei Verwendung ein- und derselben Längenmessvorrichtung für unterschiedliche Anwendungszwecke notwendig ist, war der entsprechende Interpolator bisher nicht innerhalb der beweglichen Sensoreinheit untergebracht, sondern als separate Baugruppe entfernt von der Sensoreinheit, so dass die von der Sensoreinheit erhaltenen Signale mittels Kabel und Stecker in diesem separaten Interpolator umgerechnet wurden.

Einer der Nachteile des Standes der Technik besteht darin, dass die Referenzspur über den wesentlichen Teil ihrer Länge unmagnetsiert oder einpolig homogen magnetisiert oder mit einer sehr kurzen regulären magnetischen Periode versehen ist, sodass der Referenzsensor diese Magnetisierungen als nicht magnetisiert oder als homogen magnetisiert auswertet und eine konstante Gleichspannung von Null (bei nicht magnetisierter Referenz-Spur) oder ungleich Null (bei ein polig homogener Magnetisierung) ausgibt.

An der Position der Referenzmarkierung wird die homogene Ausbildung der Referenzspur unterbrochen durch einen einzeln ausgebildeten magnetischen Pol oder auch durch eine Ausstanzung des magnetischen Materials an dieser Stelle (DE 20011703 U1). Der Referenzsensor erzeugt an dieser Stelle ein singuläres analoges Signal, das durch Vorgabe einer Schaltschwelle ausgewertet wird.

Die Amplitudenhöhe des analogen Referenzsignals nimmt mit der Zunahme des Führungs-Abstandes (Abstand zwischen Sensor und Maßstab) stark ab und grenzt deshalb dessen Toleranzbereich stark ein. Dagegen sind die Sinus/Cosinus-Signale des Positions-Sensors auf Grund der Auswertung entsprechend ihrem Größenverhältnis (Ratiometrische Auswertung) von Schwankungen der Amplitudenhöhe wenig abhängig. Der Führungs-Toleranzbereich des Sensorsystems wird also vor allem von der Amplituden-Abhängigkeit des Referenzsignals bestimmt.

Ein weiterer Nachteil des Standes der Technik besteht auch darin, daß hinsichtlich der Breite der mehreren nebeneinander liegenden Spuren des Maßstabes allein für eine Referenzmarke, wie etwa die Nullpunkt-Marke, eine separate Spur benötigt wird. Wenn also der Maßstab nur eine einzige Zähl-Spur mit in Meßrichtung zählbaren, detektierbaren Codierungen enthält, ist allein für die Referenzmarke eine zweite Spur und damit eine Verdoppelung der Breite des Maßstabes notwendig.

Um eine kompakte Bauform, also Reduzierung der Breite des Maßstabes als auch der Sensoreinheit zu erzielen, wird der Verzicht auf eine separate Referenz-Spur angestrebt.

Weiterhin wird angestrebt, dass der Referenzsensor über den gleichen Toleranzbereich des Führungsabstandes wie der Positionssensor zuverlässig arbeitet.

### III. Darstellung der Erfindung

### a) Technische Aufgabe

Ausgehend von dieser Situation bestand die Aufgabe gemäß der Erfindung darin, eine Längenmessvorrichtung zu schaffen, die trotz Einstellbarkeit insbesondere ihrer Auflösung klein und kompakt und dennoch betriebssicher aufgebaut ist.

### b) Lösung der Aufgabe

Diese Aufgabe wird durch die Merkmale der Ansprüche 1, 2, 13, 22, 34 und 48 gelöst. Vorteilhafte Ausführungsformen ergeben sich aus den Unteransprüchen.

Durch die Anordnung des Interpolators direkt in der relativ zum Maßstab beweglichen Sensoreinheit kann die Sensoreinheit mittels Kabel trotz Einstellbarkeit des Auflösungsfaktor direkt und ohne Zwischenschaltung einer separaten Baugruppe mit dem Interpolator an eine Maschinensteuerung oder eine Digitalanzeige angeschlossen werden. Auch der Platzbedarf für die Längenmessvorrichtung innerhalb einer zugrundeliegenden Maschine oder ähnlichem wird dadurch drastisch verringert.

Unabhängig davon soll für die Größe der Sensoreinheit dabei das Ziel erreicht werden, dass die Sensoreinheit nicht breiter ist als die Breite des Maßstabes, und die in Messrichtung gemessene Länge der Sensoreinheit nicht größer als 50 der kleinsten Inkremente des Maßstabes sein soll, insbesondere nicht größer als 5 cm, insbesondere nicht größer als 3 cm.

Die in der Lotrechten zur Messrichtung und deren Querrichtung, also zur Ebene des Maßstabes, gerechnete Höhe des Sensors soll nicht größer als dessen Länge sein.

Zusätzlich sind die einstellbaren Faktoren des Interpolators auch nach fertiger Montage der Sensoreinheit - also nach Einsetzen und Befestigen, insbesondere Vergiessen, der verkabelten Elektronik in die Sensoreinheit, wobei die Kontaktiereinheit noch zugänglich ist - noch einstellbar, indem die Kontaktpunkte seiner Kontaktiereinheit noch zugänglich sind.

Bei einer ― mit oder ohne umgebendem Gehäuse ― erfolgten Vergießung der Sensoreinheit erfolgt dies entweder dadurch, dass die Kontaktpunkte der Kontaktiereinheit aus dem Verguss vorstehen, als bei umgebendem Gehäuse außerhalb des Vergusses, aber noch innerhalb des Gehäuses liegen oder ― bei vollständiger Umschließung der Sensoreinheit durch die Vergussmasse ― durch Einstechen von nadelförmigen Kontaktstiften durch die Umhüllung hindurch bis auf die Kontaktpunkte zugänglich sind. Vorzugsweise wird dann eine Vergussmasse gewählt, die auch nach dem Aushärten noch elastisch, insbesondere plastisch, ist, um die durch das Einstechen der Kontaktstifte sich bildenden Öffnungen nachträglich selbsttätig wieder zu verschließen.

Dabei können die Eigenschaften, insbesondere die physikalischen Eigenschaften, der verwendeten Gußmasse je nach Position innerhalb der Sensoreinheit unterschiedlich gewählt werden, und insbesondere eine abschnittsweise, mehrstufige Vergießung vorgenommen werden:

So kann beispielsweise der untere Bereich nahe der Frontfläche der Sensoreinheit, in welcher sich die Sensoren befinden, mit einer härteren Vergußmasse vergossen werden, um einen optimalen Schutz der Sensoren gegen mechanische Beschädigungen zu erreichen.

Der weiter oben liegende, weiter zur Rückseite hin reichende, insbesondere bis einschließlich der Rückseite des Sensors reichende Verguß, kann dagegen mit einem weicheren, elastischeren, eventuell sogar plastischen Vergußmasse durchgeführt werden, um das Durchstoßen der Vergußmasse auch im ausgehärteten Zustand mit Kontaktnadeln auf die gewünschten Kontaktflächen noch zu ermöglichen.

Generell gilt dabei der Grundsatz, daß die Vergußmasse so elastisch gewählt werden muß, daß die beim Aushärten immer auftretende Schrumpfung die Elektronik und deren Bauteile nicht beschädigt, also insbesondere nicht von der Platine abreißt, und andererseits der Verguß an den jeweiligen Stellen so hart wie möglich sein soll, um den für die jeweiligen Elemente notwendigen mechanischen Schutz zu gewährleisten.

Eine Mittellösung besteht darin, beim Umgießen der Elektronik, insbesondere wenn kein umgebendes Gehäuse vorhanden ist, Kontaktöffnungen von der Außenseite der Vergussmasse bis zu den Kontaktpunkten der Kontaktiereinheit des Interpolators bestehen zu lassen. Dies ist am einfachsten dadurch möglich, dass die Form, in die die Platine, auf welcher die Elektronik angeordnet ist, zum Umhüllen mit Vergussmasse eingesetzt wird, die stiftförmigen, von der Form gegen die Platine vorstehenden Auflager an der Position aufweist, an denen später die Kontaktöffnungen zu den Kontaktpunkten gewünscht werden.

Ebenso ist auch eine Zugänglichkeit zum Interpolator zwecks Einstellbarkeit über die el. Leiter der Ausgabeeinheit, also das abführende Kabel, denkbar, erhöht jedoch in der Regel deren Aderanzahl und Durchmesser und vermindert damit deren Biegsamkeit. Der Vorteil liegt darin, dass von Anfang an ein vollständiger Verguss der Elektronik möglich ist, und keine Kontaktiereinheit freigelassen werden muss.

Um auch den Interpolator in der begrenzten Sensoreinheit unterzubringen, wird wenigstens der Interpolator, und damit auch der Wandler, als integrierter Schaltkreis (Chip) ausgeführt, und ebenso der Sensor, der das Magnetfeld des Maßstabes detektiert.

Die Elektronik (9) weist vorzugsweise auch einen Eprom, insbesondere einen EEPROM, zum Zwischenspeichern des Datenverarbeitungsprogrammes für den ersten Chip (4) und/oder den zweiten Chip (5) und/oder zum Zwischenspeichern von Signalwerten umfasst.

Zumindest dieser Sensor-Chip, von dem ― je nach Anzahl der Spuren auf dem Maßstab - auch mehrere vorhanden sein können, insbesondere alle Chips werden vorzugsweise als ungehäuster, nackter Chip onboard auf der Platine angeordnet.

Vorzugsweise ist dabei die Platine in Richtung parallel der Messrichtung innerhalb der Sensoreinheit, jedoch nicht parallel zur Maßstabebene, angeordnet. Vorzugsweise ist die in der Sensoreinheit untergebrachte Elektronik nicht auf einer, sondern auf mehreren Platinen verteilt angeordnet. Diese festen Platinen sind über flexible Leitungen, insbesondere über flexible Platinen mit Leiterbahnen, vor der Montage der Sensoreinheit bereits verbunden bzw. einstückig miteinander ausgebildet, wobei vorzugsweise die Anzahl der festen Platinen der Anzahl der abzutastenden Spuren des Maßstabes entspricht, so dass an der Vorderkante jeder der Platinen, insbesondere in dessen Längsmitte, jeweils ein Sensor, vorzugsweise als nackter Chip, angeordnet ist.

Beim Vergießen ist darauf zu achten, dass auch an dieser Vorderseite der Sensoreinheit die Sensoren und Platinen noch mit einer dünnen Schicht von Vergussmasse bedeckt sind.

Sofern die Elektronik innerhalb der Sensoreinheit nur auf einer einzigen festen Platine angeordnet wird, und dennoch mehrere Sensoren aufgrund mehrere paralleler abzutastender Spuren des Maßstabes benötigt werden, kann diese Platine innerhalb der Sensoreinheit unter spitzem Winkel zur Messrichtung, also leicht schräg, angeordnet werden, so dass die entlang dieser schrägstehenden Vorderkante angeordneten mehreren Sensoren sich dann jeweils in der Breite ihrer Spur des Maßstabes befinden, wenn die Sensoreinheit insgesamt mittig zum Maßstab in Längsrichtung geführt wird, wobei ja die Breite der Sensoreinheit nicht mit der Breite des Maßstabes exakt identisch sein muss, sondern zum Beispiel geringfügig schmaler sein kann.

Je nachdem, ob ein inkrementales oder ein absolutes Messsystem benötigt wird, weisen die Maßstäbe eine unterschiedlichen Anzahl von Spuren auf. Im einfachsten Fall, dem inkrementalen Messsystem, genügt eine Spur mit gleichmäßig sich abwechselnder Magnetisierung, und eine zweite Spur als Referenzspur, auf der im einfachsten Fall an einer einzigen Längsposition des Maßstabes eine einzige Marke als Referenzmarke bzw. ein Wechsel zwischen zwei Marken genügt.

Dabei werden aus der einen inkrementalen Spur, die im Sensor ein analoges sinusförmiges Signal bewirkt, zwei digitale, z. B. rechteckige, Signale erzeugt, die zueinander phasenversetzt ― um einen sich von einer halben Phase unterscheidenden Phasenversatz - um beispielsweise 90° liegen, so dass aufgrund des Phasenversatzes und Abtastung beider digitaler Signale sich die Laufrichtung der Sensoreinheit erkennen lässt. Zur Vermeidung von Störungen werden zusätzlich die beiden digitalen Signale in jeweils invertierter Form ein zweites Mal übermittelt.

Die Referenzmarke, die normalerweise auf einer separaten Referenzspur neben der normalen Zähl-Spur geführt wird, kann ― da sie nur an einer einzigen Längsposition vorhanden sein muss ― auch als nicht über die gesamte Länge durchgehende Spur ausgeführt sein, sondern überhaupt nur körperlich an einer einzigen Stelle vorhanden sein. Dies gibt dem Anwender der Messvorrichtung die Möglichkeit, zu wählen, an welcher Längsposition die Referenzmarke sitzt, die vor Inbetriebnahme der Messvorrichtung jedes Mal zunächst überfahren werden muss. Dies ist beispielsweise sinnvoll, wenn aus anderen Gründen beim Abschalten der Messvorrichtung die Sensoreinheit oder das sie tragende Bauteil jedes Mal in eine bestimmte der beiden Endlagen verfahren wird. Dann ist es sinnvoll, auch die Referenzmarke nahe dieser Endmarke anzuordnen.

Eine andere Möglichkeit besteht darin ― um die Spurbreite der Referenzmarke zu sparen ― die Referenzmarke in die periodische Markierung der normalen, inkrementalen, Spuren des Maßstabes zu integrieren, beispielsweise als Sondersignal, in die die Nord/Südmagnetisierung an dieser Stelle z. B. mit höherer oder niedrigerer Feldstärke ausgestattet wird, oder eine andere Länge in Messrichtung besitzt, was von der Auswerteelektronik erkannt werden kann oder ähnliches.

Das Weglassen einer separaten Referenzspur wird ermöglicht, indem die eine oder auch mehreren Referenzmarken in die normale Zähl-Spur integriert werden. Die magnetische Codierung entlang der Zähl-Spur weist ein nach irgendeinem Algorhitmus regelmäßiges Muster auf:

Im Normalfall besteht der Maßstab aus jeweils gleich langen, aufeinander abfolgend jeweils um 180° abwechselnd magnetisierten Bereichen, deren Nord-Süd-Magnetisierungsachse quer zur Längsrichtung liegt, so daß entlang einer der Längskanten des Maßstabes abwechselnd immer ein Südpol und ein Nordpol einer solchen Codierung angeordnet ist.

Die Integration der Referenzmarke in die Zählspur erfolgt dadurch, daß diese regelmäßige Abfolge von Codierungen an einer Stelle durch eine unregelmäßige Abfolge ersetzt wird, also beispielsweise bei der vorbeschriebenen abwechselnden Nord-Süd-Anordnung zwei oder auch mehr gleiche Anordnungen hintereinander erfolgen.

Dies kann beispielsweise erzielt werden, indem bei einer abwechselnden Nord-Süd-Codierung nachträglich wenigstens eine, insbesondere genau eine, der magnetisierten Codierungen geändert wird, mit der Folge, daß in Längsrichtung an dieser Stelle dann wenigstens drei gleich orientierte Codierungen aufeinander folgen, also die Codierung eine gegenüber der normalen Länge dann wenigstens dreifache Länge aufweist.

Ein Sensor in der Sensoreinheit, der - aus Gründen der Meßgenauigkeit ― in der Regel jede einzelne Codierung beim Überfahren erfassen soll, wird aufgrund dieser Unregelmäßigkeit normalerweise ein dem Meßergebnis schadendes, verändertes Signal abgeben.

Um dies zu vermeiden, kann unterschiedlich vorgegangen werden:

Die eine Lösung besteht darin, die Referenzmarke außerhalb des normalen Meßbereiches des Maßstabes anzuordnen, also an die gewünschte Meßlänge L1 des Maßstabes, in dem die Zählspur regelmäßig kodiert ist und eine zuverlässige Messung möglich ist, an wenigstens einem Ende einen Überstand L2 - vorzugsweise auf der gleichen Zähl-Spur - anzuordnen, und in diesem Überstand, vorzugsweise unmittelbar nach dem Ende der normalen Meßlänge L1, die Referenzmarke zu positionieren. Dies vergrößert jedoch die Gesamtlänge des Maßstabes gegenüber der notwendigen Meßlänge, bietet jedoch die Möglichkeit, baugleiche Sensoren innerhalb der Sensor-Einheit sowohl als Position-Sensor als auch als Referenz-Sensor zu verwenden.

Dies ist dann möglich, wenn bei einem Zufahren der Sensoreinheit auf ein mit der Referenz-Marke ausgestattetes Ende des Maßstabes innerhalb der Sensoreinheit der Referenz-Sensor in Fahrtrichtung vor dem Positions-Sensor angeordnet ist, also zuerst der Referenz-Sensor die Referenz-Marke erreicht. Dadurch erreicht beziehungsweise überfährt der Position-Sensor die Referenz-Marke nicht und die Bewegungsrichtung der Sensoreinheit kann noch vor dem Erreichen des Endes der normalen Messelänge L1 geändert werden.

Eine andere Möglichkeit besteht darin, die Sensoreinheit so auszubilden, daß auch bei Anordnung der Referenzmarke innerhalb der Meßlänge die unregelmäßige Codierung an der Stelle der Referenzmarke nicht zu einem falschen Ergebnis führt.

Zu diesem Zweck kann entweder die Auswerteelektronik entsprechend ausgebildet sein, oder in der Sensoreinheit sind zum Abtasten der Zählspur, die auch die Referenzmarke enthält, außer dem Positionssensor, dessen Aufgabe die Zählung der durchlaufenden Codierungen des Maßstabes ist, ein separater Referenzsensor in Längsrichtung beabstandet zum Positionssensor und damit die gleiche Zählspur abtastend angeordnet.

Durch unterschiedliche Auslegung von Referenzsensor und Positionssensor kann erreicht werden, daß der Positionssensor beim Überlaufen der unregelmäßigen Codierung im Bereich der Referenzmarke dennoch normal weiterzählt entsprechend der zurückgelegten Weglänge, während der Referenzsensor die unregelmäßige Codierung als Referenzmarke erkennt und dementsprechend ein Referenzsignal abgibt.

Wie bereits erwähnt, können als Positionssensor und Referenzsensor die gleiche Art von Sensor verwendet werden, wenn deren Auswerteschaltungen entsprechend unterschiedlich ausgelegt werden zur Erkennung oder Ignorierung der Referenzmarke. Auch ein Zusammenlegen von Referenzsensor und Positionssensor in Form eines einzigen Sensors und abwechselnd unterschiedliches Betreiben dieses zum Beispiel nur einen Sensors mittels unterschiedlicher Auswerteprogramme kann zum selben Ergebnis führen.

Dabei ist auch unerheblich, ob und wie stark die ggf. durch einen Interpolator der Auswerteelektronik erfolgende Interpolation der analogen Signalperiode beim Umwandeln in ein binäres Signal ist. Erfolgt eine solche Interpolation, bei der z. B. eine analoge Sinus-Cosinus-Signalperiode in 200 binäre Signalperioden (z. B. Rechtecksignale) unterteilt wird, so wird an einer bestimmten Stelle der analogen Signalperiode, beispielsweise beim Nulldurchgang von der negativen zur positiven Seite, ein relatives Index-Signal im binären, interpolierten Signalablauf erzeugt, um die Relativlage der Binärsignale innerhalb der analogen Signalperioden zu kennzeichnen.

Die durch die Referenzmarkierung auf der Zählspur beabsichtigte absolute Referenzierung ist hiervon jedoch unabhängig.

Diese absolute Referenzierung kann entweder dem Zweck dienen, eine absolute Nullage auf dem Maßstab zu definieren oder das Ende des Meßbereiches des Maßstabes zu kennzeichnen, oder auch anderen Zwecken dienen.

Vorzugsweise wird im Zuge der Aufbereitung dieser Referenzsignale auch eine Führungs-Fehler-Erkennung verwirklicht, die ein spezifisches Warnsignal abgibt, wenn die Distanz zwischen Sensoreinheit und Maßstab zu groß wird und damit die zuverlässige Erkennung der Codierungen des Maßstabes durch die Sensoreinheit gefährdet wird.

Bei der unterschiedlichen Auslegung von Positionssensor und Referenzsensor besteht eine Möglichkeit darin, daß die beiden Sensoren jeweils unterschiedliche Längenbereiche des Maßstabes erfassen:

So kann beispielsweise der Referenzsensor nur die Länge einer einzigen Codierung des Maßstabs erfassen, während der Positionssensor eine Länge von z. B. vier solcher Codierungen abdeckt und auch erfaßt, und als analoges Signal einen Misch-Wert dieser z. B. 4 Codierungen ausgibt, z. B. deren Mittelwert ausgibt.

Beim Überlaufen einer Referenzmarkierung, die beispielsweise aus zwei hintereinander folgenden, gleichen Codierungen besteht, durch die Sensoreinheit, wird aufgrund der Mittelwertbildung das abgegebene analoge Signal über den gesamten Bereich der Referenzmarke die gleichbleibende, positive oder negative Orientierung bzw. Amplitude aufweisen. Mittels des nur eine einzelne Codierung erfassenden Referenzsensors ist es jedoch möglich, trotz des Fortschritts in Meßrichtung die mehrfach gleichbleibende Codierung festzustellen und damit die Referenzmarke als z. B. exakt in der Mitte zwischen den z.B. zwei aufeinanderfolgenden, gleichlautenden Codierungen des Maßstabes zu detektieren.

Sofern es sich bei der beschriebenen Markierung mit zwei aufeinander folgenden, gleichen Codierungen um eine Nullpunkt-Marke gehandelt hat, kann eine Maßstab-Ende-Marke verkörpert werden durch mehr als zwei hintereinander folgende, gleich lautende Codierungen des Maßstabes, insbesondere eine Anzahl von gleichen aufeinander folgenden Codierungen, die gleich oder größer ist als die Anzahl der vom Positionssensor abgedeckten bzw. gleichzeitig detektierten Codierungen.

Um bei Anordnung von Maßstab-Ende-Marken den Überstand im Maßstab gering halten zu können, können in der Sensoreinheit beidseits des Positionssensors, dabei wiederum in einem hierzu definierten, exakt bekannten Abstand, jeweils ein Referenzsensor angeordnet werden, so daß die Ende-Marke vor Erreichen durch den Positionssensor bereits vom Referenzsensor erkannt und damit die hiermit überwachte Maschine oder Baugruppe rechtzeitig gestoppt werden kann.

Insbesondere können Positionssensor und Referenzsensor auf dem gleichen Chip der Sensoreinheit angeordnet werden.

Um die unregelmäßige Codierungsfolge im Bereich der Referenzmarke zu erkennen, wird in der Regel eine logische Verknüpfung der Signale des Positionssensors und des Referenzsensors durchgeführt, entweder noch deren analoger Signale, beispielsweise durch Subtraktion der Signale von Referenzsensor und Positionssensor und anschließender Schwellwertauswertung, oder durch Vergleich deren binärer Signale durch eine logische Verknüpfung.

Bei Vorhandensein von mehr als einem Referenzsensor werden deren Ausgänge vorzugsweise parallel geschaltet, und dadurch ein Mittelwert als Ausgangssignal der beiden Referenzsensoren erzeugt. Insbesondere wenn davon das analoge Ausgangssignal des Positionssensors gewichtet abgezogen wird, entsteht hieraus bei Überlaufen von regulären Codierungsbereichen ein regelmäßiges, analoges, insbesondere sinusförmiges, Referenzsignal. Erst bei Überfahrt der Referenzmarke invertiert sich eines der Referenzsignale und damit auch deren Mittelwert, wodurch auch das analoge Endsignal beeinflußt wird.

Der Vorteil einer Unterbringung der Referenzmarke in der Zählspur, also den normalen Codierungen der Zählspur, besteht nicht nur in der schmaleren Ausbildung des Maßstabes und der Sensoreinheit, sondern auch in der nachträglichen Aufbringbarkeit der Referenzmarke:

So kann ein regelmäßig kodierter, insbesondere magnetisierter, Maßstab durch Ablängen von einem auf diese Art und Weise endlos hergestellten Band erhalten und auf dem gewünschten Bauteil, z. B. einer Maschine, positioniert und fixiert werden. Die Aufbringung der Referenzmarke erfolgt durch anschließende Ummagnetisierung wenigstens einer der magnetischen Codierungen auf dem Maßstab, mit einem gegenüber der Magnetisierung im Maßstab stärkeren Magnetisierungskopf, was beispielsweise auch ein starker Dauermagnet, etwa ein Neodym-Eisen-Bor-Magnet, sein kann. Für die Festlegung der Referenzmarke kann auch die bereits an der zu überwachenden Maschine montierte Sensoreinheit benutzt werden, an der dieser Magnetisierungskopf befestigt werden kann und dann z. B. mit Hilfe der Steuerung der Maschine in eine Position verfahren werden kann, die z. B. mit dem programmierten Nullpunkt der Maschinensteuerung übereinstimmt. Auch eine nachträgliche Verlegung oder zusätzliche Aufbringung von Referenzmarken, sei es als Nullpunktmarken oder als Maßstab-Ende-Marken ist möglich, was beispielsweise dann notwendig wird, wenn sich der reguläre Arbeitsbereich der Maschine durch Umbauen oder Ausstatten mit zusätzlichen Maschinenkomponenten verändert.

Da der Referenzsensor nicht mehr eine homogen magnetisierte Spur, sondern eine periodisch abwechselnd magnetisierte Spur mit einer geeigneten magnetischen Periode auswertet, ist das analoge Referenzsignal nunmehr wie das Positionssignal ein Sinus-förmiges Signal mit positiv und negativ gleichen Amplituden symmetrisch zu seinem Mittelwert. Dabei ist von Vorteil, dass nicht die Amplitude, sondern die über einen weiten Amplitudenbereich auswertbare Phasenlage für die Auswertung ausschlaggebend ist. Dies stellt sicher, dass der Toleranzbereich für den Führungsabstand des Sensorsystems nicht mehr vornehmlich vom Referenzsensor eingeschränkt ist. Eine regulär magnetisierte Spur mit integrierter Referenz-Marke kann, wenn die Positions-Spur ungestört bleiben soll, auch als separate Referenz-Spur ausgeführt werden.

### c) Ausführungsbeispiele

Ausführungsformen gemäß der Erfindung sind im folgenden beispielhaft näher beschrieben. Es zeigen:
- Fig. 1:: Eine perspektivische Darstellung von Sensoreinheit 2 und Maßstab 1,
- Fig. 2:: die Anordnung gemäß Fig. 1 in Blickrichtung II,
- Fig. 3:: eine gegenüber Fig. 1 abgewandelte Anordnung in Blickrichtung III der Fig. 1,
- Fig. 4:: die Platinen (13) gemäß Fig. 1,
- Fig. 5:: eine Prinzipdarstellung der Komponenten der Vorrichtung,
- Fig. 6:: ein Prinzip-Schaltbild einer Schutzbeschaltung,
- Fig. 7:: eine Prinzipdarstellung von Sensoreinheit 2 und Maßstab 1 mit nur einer Spur,
- Figuren 8:: die Stadien der Signalumwandlung bis zu einem binären Referenzsignal,
- Fig. 9:: eine Prinzipdarstellung eines verlängerten Maßstabes und
- Fig. 10 und Figuren 11:: beispielhafte Schaltungen zur Erzielung der gewünschten Ausgangssignale.

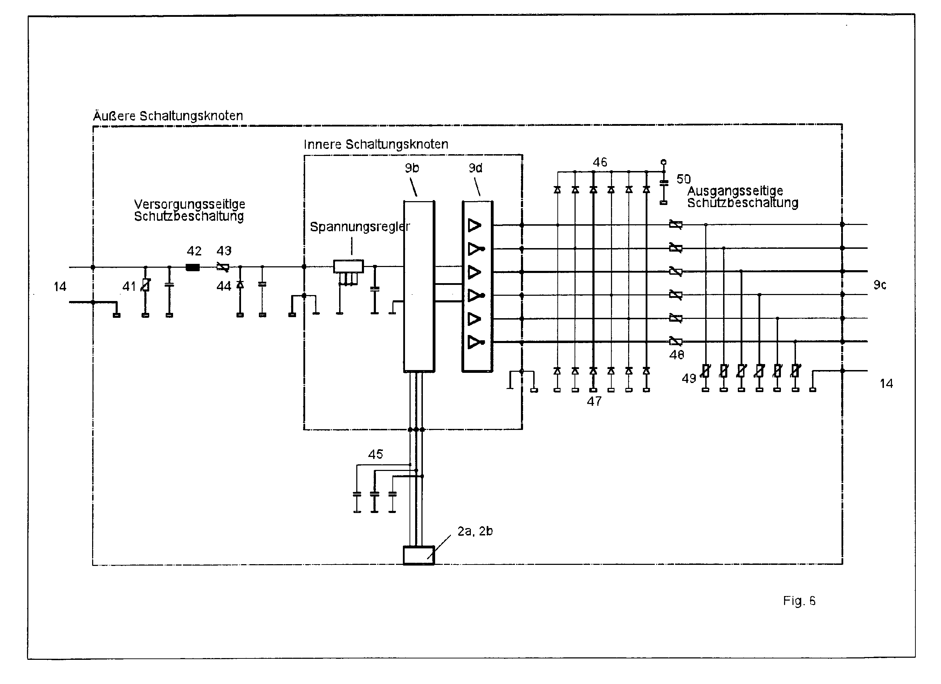

Wie aus Fig. 5 ersichtlich, besteht die Längenmeßvorrichtung einerseits aus dem Maßstab 1 beweglichen Sensor 2a sowie einer Auswerte-Elektronik 9, da der Sensor 2a beim Darübergleiten in Meßrichtung 10 die in dieser Meßrichtung 10 aufeinander periodisch abfolgenden, unterschiedlich magnetisierten, beispielsweise abwechselnd als Nord- und Südpol magnetisierten, insbesondere gleich langen Segmenten 27a, 27b als analoges, sinusförmiges Signal 28 oder insbesondere als nur aus positiven Sinushalbschwingungen bestehendes sinusähnliches analoges Signal detektiert, umfaßt die Elektronik einerseits einen Wandler 9a zum Umsetzen dieses periodischen analogen Signals in ein periodisches digitales Signal.

Die Elektronik umfaßt ferner einen Interpolator 9b, der auch mit dem Wandler 9a zusammen in einer Baugruppe und als eine einheitliche Schaltung ausgeführt sein kann, und welcher bewirkt, daß das periodische digitale Signal eine höhere Auflösung besitzt als das zugrunde liegende periodische analoge Signal, also die Periodenabstände des digitalen Signals insbesondere um ein Mehrfaches, insbesondere um mehr als den Faktor 10, insbesondere um mehr als den Faktor 100, geringer sind als die Periodenabstände des analogen Signales.

Dabei soll der Faktor, um den der Interpolator die Auflösung verbessert, einstellbar sein.

Die Verbesserung der Auflösung wird erzielt, indem die Form des zugrunde liegenden analogen Signals bekannt ist und aus dem Wert der Abszisse 28a des analogen Signals und dessen Steigung die momentane Position auf der in Meßrichtung liegenden Ordinate 28b innerhalb einer Periode des analogen Signals bekannt ist.

Das erzeugte periodische digitale Signal wird meistens in Form eines Rechtecksignals 29 wiedergegeben, und vorzugsweise ― zur Erkennbarkeit der Bewegungsrichtung in positiver oder negativer Meßrichtung 10 und zur Verbesserung der Signalsicherheit ― in Form zweier analoger digitaler Rechtecksignale 29a, 29b, die zueinander phasenversetzt sind, wobei der Phasenversatz sich von einer halben Phase unterscheidet, also etwa 90 ° beträgt, da nur dann die Bewegungsrichtung aus dem Vergleich der beiden digitalen Signale 29a, 29b, erkennbar ist.

Vorzugsweise kann jedes der digitalen Rechtecksignale zusätzlich, wie anhand des Signales 29b dargestellt, auch als zusätzliches invertiertes Signal nochmals übertragen werden, um wiederum die Übertragungssicherheit zu erhöhen.

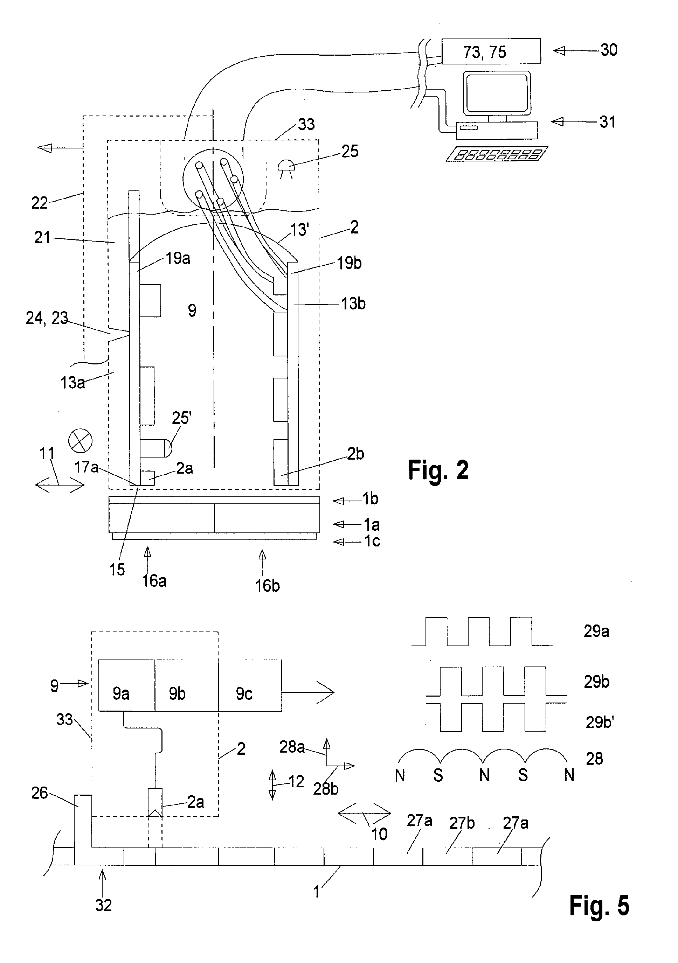

Die Elektronik umfaßt ferner eine Ausgabeeinheit 9c, um das digitale Signal weiterleiten zu können, sei es an eine Anzeigeeinheit, beispielsweise eine Digitalanzeige 30, wie in Fig. 2 dargestellt, oder an eine Weiterverarbeitungseinheit, beispielsweise eine Maschinensteuerung oder einen Computer 31, wie ebenfalls in Fig. 2 angedeutet.

In Fig. 5 ist ferner dargestellt, daß zumindest der Wandler 9a und der Interpolator 9b der Elektronik 9 zusammen mit dem Sensor 2a innerhalb einer Baueinheit, der Sensoreinheit 2, welche in Meßrichtung 10 relativ zum Maßstab 1 beweglich ist, untergebracht sind.

Die Ausgabeeinheit 9c ist meist als Stecker am Ende eines von der Sensoreinheit 2 wegführenden Kabels ausgebildet.

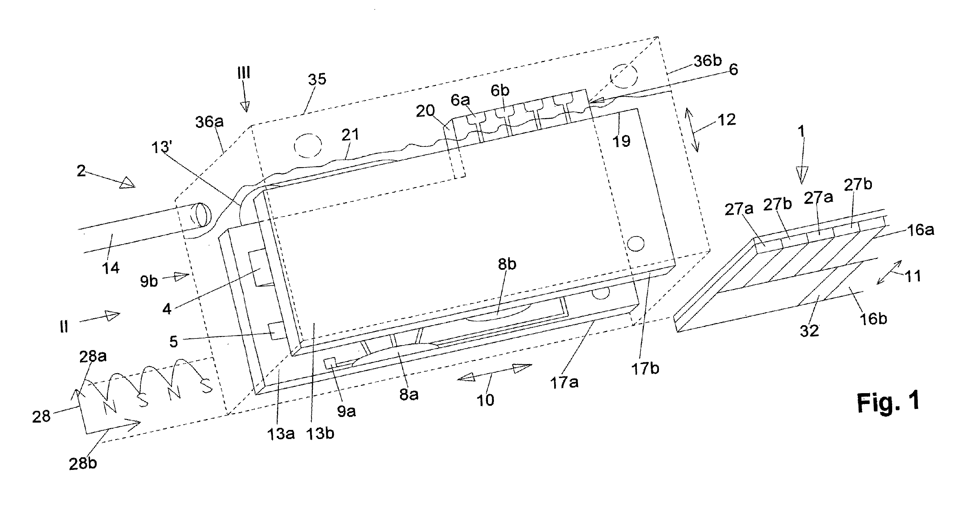

Die Fig. 1 bis 4 zeigen Bauformen der Vorrichtung, insbesondere deren Sensoreinheit 2, in ihrer körperlichen Ausbildung. Dabei ist die Sensoreinheit 2 ja in der Regel an einem ― in den Fig. nicht dargestellten ― beweglichen Bauteil einer Maschine angeordnet, dessen Position detektiert werden soll, während der Maßstab 1, auf dessen Oberfläche sich die Sensoreinheit 2 in Meßrichtung 10 bewegt ― an einem feststehenden Maschinenteil aufgebracht ist.

Wie besser die Schnittdarstellung der Fig. 2 zeigt, besteht der Maßstab 1 aus einem Magnetband 1a, bei dem auf wenigstens einer Spur 16a in Meßrichtung 10 jeweils gleich lange, jedoch unterschiedlich, beispielsweise gegensätzlich als Nord- und Südpol, magnetisierte, Segmente 27a, 27b hintereinander fortlaufend abwechselnd ausgebildet sind.

Eine weitere Spur 16b kann eine Referenzmarke 32 meist an nur einer einzigen Längsposition des Maßstabes 1 angeordnet sein, welche dann meist die Nulllage des Systems darstellt.

Daneben können weitere Spuren mit fortlaufend abwechselnd hintereinander angeordneten Segmenten wie bei Spur 16a erläutert, vorhanden sein, u. U. jedoch mit anderer, insbesondere mehrfacher, Länge dieser Segmente in Meßrichtung gegenüber der der Spur 16a oder aller anderen Spuren, inbesondere wenn es sich um ein absolut messendes Längenmeßsystem handelt.

Dieses Magnetband 1a ist aus mechanischem Schutz auf der Oberseite abgedeckt von einem Edelstahl-Band 1b oder einem abriebfesten Kunststoffband, und auf der Unterseite mit einer Klebeschicht 1c ausgestattet, zum Aufbringen auf den gewünschten Untergrund.

Dabei muß die Referenzmarke 32 nicht integraler Bestandteil des Magnetbandes 1a und damit des übrigen Maßstabes 1 sein.

Der Maßstab 1 kann auch nur die fortlaufend abwechselnd magnetisierten Spuren wie Spur 16a umfassen, während die Referenzmarke 32 als separates kurzes Stück nur an einer Längsposition neben der Spur 16a lagefixiert, beispielsweise ebenfalls aufgeklebt, wird abhängig von dem Erfordernis des jeweiligen Anwendungsfalles.

Dabei ist es sinnvoll, diese Referenzmarke 32, die sehr genau positioniert werden muß, korrelierend mit einer bestimmten Längsposition der Sensoreinheit 2 und damit der an der Sensoreinheit 2 befestigten Maschinenbauteil anzuordnen. Zu diesem Zweck ist es möglich, gemäß Fig. 5 diese separate Referenzmarke 32 mit einem in der Lotrechten 12 zur Meßrichtung 10 aufragenden Anschlag 26 auszustatten, an dem die Stirnfläche 33 der Sensoreinheit 2 anschlagen kann, so daß diese Sensoreinheit 2 zusammen mit dem sie tragenden Maschinenteil in die gewünschte Position gebracht wird und dann die Referenzmarke 32 unter Anlage des Anschlages 26 an der Sensoreinheit 2 neben der Spur 16a des Maßstabes 1 lagefixiert wird.

In allen Fällen kommt es darauf an, daß ― wie Fig. 2 zeigt ― die innerhalb der Sensoreinheit 2 angeordneten ein oder mehreren Sensoren 2a, 2b einen solchen Abstand in Querrichtung 11 derjenigen Spur 16a, 16b, laufen, die sie abtasten sollen.

Zu diesem Zweck ist die innerhalb der Sensoreinheit 2 angeordnete Elektronik auf einer oder mehreren Platinen, vorzugsweise auf zwei zueinander parallellen starren Platinen 13a, 13b, angeordnet und vergossen.

Die Elektronik befindet sich dabei entweder im Inneren eines (nicht dargestellten) Gehäuses oder die Elektronik ist nach Positionieren in einer Form 22, wie in Fig. 2 dargestellt ― vergossen worden, wobei anschließend die Form 22 wieder entfernt wird, und die Umhüllung der Elektronik ausschließlich aus der Vergußmasse 21 besteht.

Wie in den Fig. 1, 2 und 4, die die gleiche Bauform bestreffen, zu entnehmen, erstrecken sich die beiden parallel liegenden Platinen 13a, 13b in Meßrichtung 10 sowie in der von der Ebene des Maßbandes, die durch die Meßrichtung 10 und die hierzu quer verlaufende Querrichtung 11 definiert ist, lotrecht abstehenden Lotrechten 12, mit gleichbleibendem Abstand. Die Bestückung der Platinen 13a, 13b erfolgt dabei vorzugsweise auf der zueinander gewandten Innenseite, was zusätzlich Beschädigungen von außen erschwert.

Die Platinen 13a, 13b erstrecken sich dabei mit ihren Frontkanten 17a, 17b bis nahe an die Frontfläche 34 der Sensoreinheit 2.

Bei der vorliegenden Bauform sind zwei Sensoren 2a, 2b innerhalb der Sensoreinheit 2 vorhanden, entsprechend der zwei vorhandenen Spuren 16a, 16b des Maßstabes 1. Diese Sensoren 2a, 2b sind jeweils auf einer der festen Platinen 13a, 13b nahe an bzw. unmittelbar an deren Frontkante 17a, 17b angeordnet, vorzugsweise in Längsrichtung, der Meßrichtung 10, etwa in der Mitte dieser Platinen 13a, 13b.

Bezüglich der dem Maßstab 1 zugewandten Frontfläche 34 der Sensoreinheit 2 sind die Sensoren 2a, 2b damit nur so geringfügig zurückversetzt, daß sie von einer dünnen Schicht der Vergußmasse 21 als mechanischem Schutz und Schutz gegen Verschmutzung bedeckt sind.

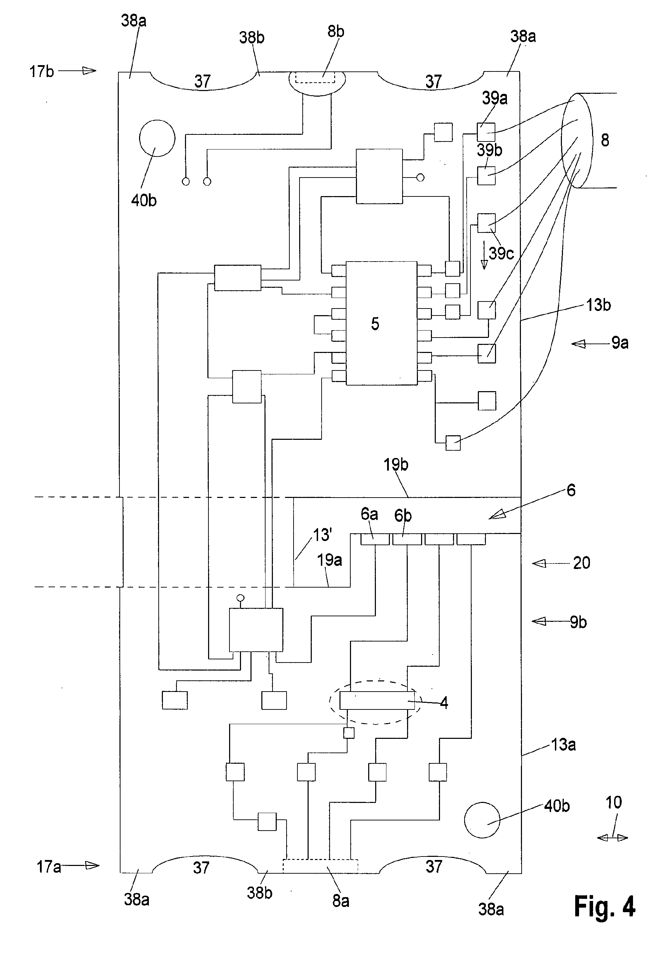

Die beiden festen Platinen 13a, 13b sind über eine flexible Platine 13' miteinander verbunden, die an der von der Frontkante 17a, 17b abgewandten Rückkante 19a, 19b jeder Platine 13a, 13b abstrebt. Dies ermöglicht es, daß vor dem Einbauen in der Sensoreinheit 2 die gesamte Platine 13, also bestehend aus den beiden festen Platinen 13a, 13b und deren verbindenden flexiblen Platine 13', die im wesentlichen die beiden festen Platinen verbindende Leiterbahnen aufweist, in der Abwicklung, also in einer Ebene ausgelegt bestückt und gehandhabt werden können, wie in Fig. 4 dargestellt.

Um den ebenfalls auf den Platinen untergebrachten Interpolator b hinsichtlich seines Faktors auch nachträglich noch einstellen bzw. verstellen zu können, müssen Kontaktpunkte 6a, 6b... der Sensoreinheit 2 auch nach deren Fertigstellung noch erreichbar sein, um hierdurch mittels Programmierung, um den in der Regel als Chip 4 ausgebildeten Interpolator 9b neu programmieren zu können.

Vor allem wenn die Elektronik 9 innerhalb eines Gehäuses der Sensoreinheit 2 nach der Montage vergossen wird, weist eine der Platinen 13a einen Fortsatz 20 auf, der über die ansonsten vorhandene Rückkante 19a vorsteht und sich nur über einen Teil der Länge der Platine 13a ersteckt, und auf dessen freiem Ende die Kontakpunkte 6a, 6b ... aufgebracht sind. Die verbindende flexible Platine 13' verbindet die beiden Platinen dagegen von der dem gegenüber zurückgesetzten Rückkante 19a, 19b ... aus. Dadurch ist es möglich, innerhalb eines vorhandenen Gehäuses der Sensoreinheit 2 deren Elektronik 9 zu vergießen durch Auffüllen mit Vergußmasse 21 von der Rückfläche 35 her bis über die flexible Platine 13' und auch die Rückkanten 19a, 19b der festen Platinen 13a, 13b hinweg, so daß aus dem Verguß auch nach dem Aushärten nur noch das freie Ende des Fortsatzes 20 und damit deren Kontaktpunkte 6a, 6b vorstehen und zugänglich bleiben. Geschützt werden die Kontaktpunkte 6a, 6b dann durch das Verschließen der Rückseite 35 der Sensoreinheit 2 mittels eines nicht näher dargestellten Deckels.

Das Kabel 14 wird dagegen vorzugsweise aus einer der in Meßrichtung 10 weisenden Stirnflächen 36a, 36b der Sensoreinheit 2 herausgeführt.

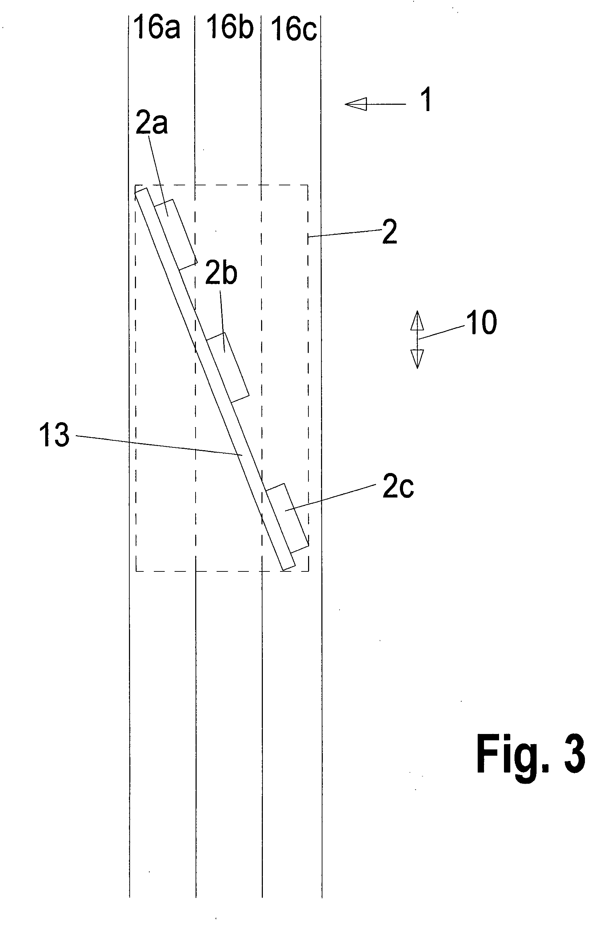

Fig. 3 zeigt in der Draufsicht der Blickrichtung 3 eine andere Anordnung bei einer Lösung, in der die Elektronik 9 innerhalb der Sensoreinheit 2 auch nur einer einzigen, festen Platine 13 angeordnet ist. Wenn mit einer solchen Sensoreinheit 2 dennoch mehrere nebeneinanderliegende Spuren, beispielsweise drei Spuren 16a, 16b, 16c, eines Maßstabes 1 abgetastet werden sollen, kann die Platine 13, die ebenfalls wie in den Fig. 1 und 2 dargestellt, in der Lotrechten 12 aufragt, unter spitzem Winkel schräg, also im kubischen Gehäuse der Sensoreinheit 2, z. B. diagonal, angeordnet werden. Dies ermöglicht es, mehrere Sensoren 2a, 2b, 2c, in jede Spur in Vorausrichtung der Platine 13 beabstandet an deren Frontkante anzuordnen, so daß jeder der Sensoren im Querbereich der durch ihn abzutastenden Spur 16a, 16b oder 16c liegt.

Fig. 4 zeigt die aus den beiden Platinen 13a, 13b sowie der flexiblen Platine 13' bestehende Gesamtplatine 13:

Diese Abwicklung der Fig. 4 zeigt die beiden starren Platinen 13a, 13b, in zueinander paralleler Lage in einer Ebene, mit voneinander abgewandten Frontkanten 17a, 17b, und einander zugewandten Rückkanten 19a, 19b. Dabei ist diese Rückkante 19a der einen festen Platine 13a in etwa einer Hälfte ihrer Längserstrekkung in Meßrichtung 10 mit der anderen Rückkante 19b mit einer flexiblen Platine 13' verbunden, wobei die flexible Platine 13' vorzugsweise einstückig mit den entsprechenden Beschichtungen der starren Platinen 13a, 13b zusammen ausgebildet ist und damit als einheitliche Platine hergestellt werden kann.

An den Frontkanten 17a, 17b weisen die Platinen jeweils beidseits der Mitte Ausbuchtungen 37 auf, so daß an den Enden der Frontkante Vorsprünge 38a und in der Mitte ein Vorsprung 38b verbleibt. Auf den mittleren Vorsprung 38b ist jeweils ― möglichst nahe an der Frontkante ― ein Sensor 8a, bzw. 8b als on-board-Chip, also als nackter ungehäuster Chip, aufgebracht mittels bonding oder sogar der flip-chip-Technik, und elektrisch verbunden. Die seitlich äußeren Vorsprünge 38a stehen noch etwas weiter vor als der mittlere Vorsprung 38b und stellen bei Abstützung der Sensoreinheit 2 auf einer ebenen Anlage beim Vergießen sicher, daß gegenüber der späteren Frontfläche 15 der Sensoreinheit 2 die Sensoren 8a, 8b dem gegenüber etwas zurückstehen und von einer Schicht aus Vergußmasse bedeckt werden.

In der anderen Hälfte der Rückkante 19a der einen festen Platine 13a steht der Fortsatz 20 gegen die andere feste Plantine 13b vor, die an ihren freien Enden die Kontaktpunkte 6a, 6b... aufweist. Auf einer der starren Platinen 13b sind Lötpunkte 39a, 39b, 39c angeordnet, die zum Anschluß der einzelnen Andern des Kabels 8 dienen, welches der Weiterleitung der aufbereiteten Signale an eine Ausgabeeinheit dient.

Auf den Platinen 13a, 13b sind neben diskreten elektronischen Bauelementen auch jeweils ein Chip 4, 5, insbesondere jeweils auch in ungehäuster, nackter Form aufgebracht, wobei vorzugsweise von den zusätzlichen Chips jeder auf einer der Platinen angeordnet ist, und damit auch der Wandler 9a einerseits und der Interpolator 9b andererseits im wesentlichen auf getrennten festen Platinen 13a, 13b untergebracht sind.

In Fig. 4 sind ferner an jeweils einer der Ecken der Platinen 13a, 13b Bohrungen 40a, 40b zu erkennen, die der mechanischen Befestigung beispielsweise mittels Verschrauben derartiger Platinen an einem anderen Bauteil dienen, beim Vergießen jedoch der zusätzlichen Durchdringung und Hinterschneidung der Platinen mit Vergußmasse dienen. Daher ist auch nach dem Umklappen dieser Platine 13 der Fig. 4 in eine zueinander parallele Lage der festen Platinen 13a, 13b eine Fluchtung der Bohrungen 4a, 4b nicht unbedingt erforderlich.

Während bei der Lösung gem. Fig. 4, also mit nach oben über die Vergußmasse 21 aufragendem Fortsatz 20 gemäß Fig. 2, die Elektronik 9 und insbesondere der Interpolator 9b innerhalb der Sensoreinheit 2 auch nach dem Vergießen, also nach verwendungsfähiger Fertigstellung, kontaktierbar und damit programmierbar ist durch Aufstecken eines Steckers oder andere elektrische Kontakte auf die Kontaktstellen 6a, 6b..., Kontaktiereinheit 6 sind auch andere Möglichkeiten der späteren Kontaktierung und damit auch Programmierung denkbar:

Wie anhand Fig. 2 für den Fall eines gehäuselosen Umgießens der Elektronik 9 beschrieben, weist die Aussenseite der Vergußmasse 21 Kontaktöffnungen 24 auf, die von der Außenseite des Vergusses bis auf die Platine durchgehen als Öffnungen mit geringem Querschnitt, bedingt durch die Auflager 23 der Form 22 beim Vergiessen.

Wenn diese Kontaktöffnungen 24 an Stellen der Kontaktpunkte gewählt werden, kann hierdurch mittels Kontaktnadeln oder ähnlichem eine elektrisch leitende Verbindung zur Elektronik hergestellt werden, obwohl die Elektronik weitestgehend, nämlich bis auf die Kontaktöffnungen 24 mit sehr geringen Öffnungsquerschnitten ― von der Vergußmasse 21 abgedeckt ist.

Selbst durch eine vollständig durchgehend die Platinen 13a, 13b umschließende Vergußmasse 21, aus der also auch kein Fortsatz 20 mit Kontaktiereinheit mehr vorstehen muß, kann mittels derartiger Kontaktnadeln eine Kontaktierung und damit auch Programmierung erfolgen, indem die Kontaktnadeln einfach durch den ausgehärteten Verguß hindurchgestochen werden bis auf den entsprechenden Kontaktpunkt auf der Außenseite der Platine 13a, 13b. Für diesen Fall empfiehlt es sich, als Vergußmasse 21 ein Material zu wählen, welches ausreichend elastisch, evtl. sogar plastisch auch nach dem Aushärten bleibt, um nach Zurückziehen der Kontaktnadeln die hierdurch gebildeten Öffnungen selbsttätig wieder aufgrund Eigenelastizität bzw. Eigenplastizität zu schließen.

Fig. 6 zeigt das Prinipschaltbild der Schutzbeschaltung. Innerhalb der sogenannten inneren Schaltungsknoten befindet sich die eigentliche auswertende Elektronik, bestehend aus dem Interpolator 9b, der in der Regel auch den Wandler 9a umfaßt, einer Leitungstreiberschaltung 9d und einem Spannungsregler.

Dabei soll klargestellt werden, daß die inneren Schaltungsknoten - ebenso wie die äußeren Schaltungsknoten, die die Grenze zwischen der Schutzbeschaltung und der Umgebung darstellen - nicht unbedingt körperliche Knoten oder Kreuzungen von Leiterbahnen sein müssen, sondern auch einfache, durchgehende Leiterbahnen sein können, und damit lediglich die Grenze zwischen einzelnen schaltungstechnischen Funktionen bzw. Schaltungsteilen gemeint ist.

Die Schutzbeschaltung verfügt dabei am linken und rechten Bildrand der Fig. 6 über Ausgänge zur Ausgabeeinheit 9c hin, die in der Regel durch das Kabel 14 repräsentiert wird, welches vom Kopf der Sensoreinheit 2 wegführt und an seinem freuen Ende einen Stecker zum Anschließen an andere Geräte besitzt.

Dieses Kabel 14 umfaßt einerseits Leitungen für die Stromversorgung der Sensoreinheit 2, die den Zugang zur Schutzbeschaltung von der linken Seite der Fig. 6 darstellen. Die Leitungen des Kabels 14 zur Übermittlung der Ausgangssignale verlassen die Fig. 6 auf der rechten Seite.

Auf der Versorgungsseite (links) umfaßt ein Varistor 41, der impulsförmige Überspannungen verhindern soll, sowie einen Schutz gegen Falschpolung der Stromversorgungsleitungen des Kabels 14. Dieser sogenannte Verpolschutz umfaßt einen stromabhängigen Widerstand 43 und eine Verpolschutz-Diode 44. Im Falle der falschen Polung schließt diese Diode 44 die Versorgungsspannung, die invers an der Diode anliegt, kurz und die Stromstärke wird durch den stromabhängigen Widerstand 43 begrenzt, wobei der Stromstärkenanstieg durch eine Induktivität 42 begrenzt wird.

Die Induktivität 2 sowie der stromabhängige Widerstand 3 sind in Reihe im Versorgungsleiter geschaltet, von dem aus sowohl der Varistor 41 als auch die Verpolschutzdiode 44 auf Masse gelegt sind, ebenso wie vor und hinter den beiden in Reihe geschalteten Elementen jeweils ein Kondensator auf Masse gelegt ist.

Diese Art des Verpolschutzes hat den Vorteil, daß keine Diode in Reihe geschaltet ist und damit kein Spannungsverlust über der Diodenstrecke entsteht. Bis zu einer Versorgungsspannung, beispielsweise 5 V, kann die Schaltung betrieben werden.

Zur absorbtiven Befilterung hochfrequenter Störspannungen ist als Induktivität 42 eine verlustbehaftete Ferritinduktivität vorgesehen.

Auf der Ausgangsseite (rechts) ist die Schutzbeschaltung zweistufig ausgebildet:

Einerseits begrenzen wiederum Varistoren 9, die von den einzelnen Ausgangsleitungen aus auf Masse gelegt sind, impulsförmige Überspannungen. Der ggf. verbleibende Überspannungsanteil wird durch Kappdioden 46, 47 von der Leitungstreiberschaltung 9d fern gehalten, die gegen Masse oder die interne Versorgungsleitung des Kabels gepolt sind. Zu dieser internen Versorgungsleitung sind Kondensatoren 50 mit hohen Kapazitätswerten parallel geschaltet, so daß die Versorgungsleitung die durch Überspannungsimpulse eingeleiteten Impulsströme aufnehmen kann.

Falls durch eine Fehlpolung die Versorgungsspannung an eine dieser Ausgangsleitungen angelegt wird, fließen Kurzschlußströme über die Kappdioden 46, wobei die Kurzschlußströme jedoch durch stromabhängige Widerstände 48 begrenzt werden, so daß es nicht zu einer Zerstörung der Kappdioden kommen kann.

In den Verbindungsleitungen zwischen der Auswertungselektronik und den Dioden 2a,b,... sind ferner Filterelemente angeschlossen und gegen Masse gepolt, die auf die Sensoren 2a, 2b aufgebrachte elektrostatische Entladungen ableiten sollen.

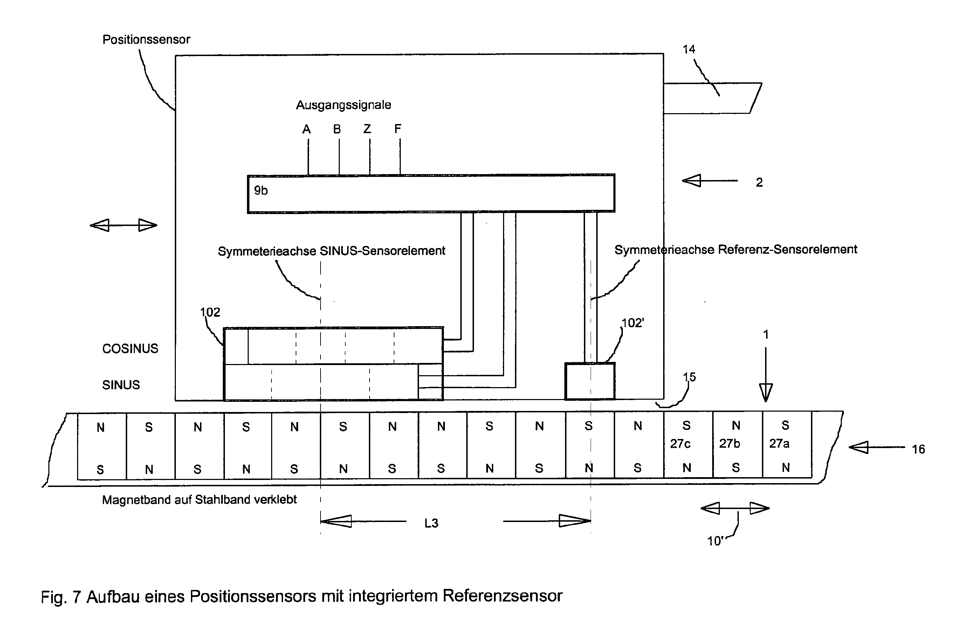

Die Figuren 7 ― 11 betreffen Lösungen mit einem Maßstab 1, der außer der einen oder mehreren Zähl-Spuren 16 keine zusätzliche Spur für Referenzmarken aufweist. Sofern mehrere Zählspuren nebeneinander benutzt werden, besitzen diese in der Regel unterschiedliche Teilung. In den folgenden Beispielen ist pro Maßstab jeweils nur von einer einzigen Spur 16 ausgegangen, deren reguläre magnetische Codierung in der in Meßrichtung 10 abwechselnden Anordnung von magnetisierten Segmenten, sogenannten Codierungen, besteht, deren von Nord nach Süd verlaufende Magnetisierungsachse quer zur Meßrichtung 10 und insbesondere auch quer zur Ebene des Maßstabes im Maßstab 1 verläuft, und wobei die reguläre Anordnung darin besteht, daß diese gleich langen Codierungen in Meßrichtung 10 jeweils mit umgekehrter Polung aufeinander folgen, so daß entlang einer Längskante des Maßstabes 1 immer ein Nordpol einer Codierung auf einen Südpol der nächsten Codierung und umgekehrt folgt.

Fig. 7 zeigt dabei im Prinzip den Maßstab 1 und die darüber angeordnete Sensoreinheit 2 in einer Seitenansicht in ihrer Relativlage, so daß die Orientierung der einzelnen Codierungen bzw. Segmente 27a, 27b wie vorbeschrieben sichtbar ist.

In der Sensoreinheit 2 sind an oder in deren Frontfläche 15 einerseits der Positionssensor 102 und andererseits der Referenzsensor 102' angeordnet, die in Meßrichtung 10 um den Abstand L3, gemessen zwischen deren jeweiligen Symmetrieachsen, die lotrecht zur Maßstabebene verlaufen, beabstandet sind. Beide Sensoren sind über elektrische Leitungen mit dem Interpolator 9b verbunden, der sich in der Sensoreinheit 2 befindet und binäre Ausgangssignale A, B, Z, F abgibt, die über ein Kabel 14, welches von der Sensoreinheit 2 wegführt, einer weiterverarbeitenden Einheit, beispielsweise einer nicht dargestellten Ausgabeeinheit, zugeführt werden.

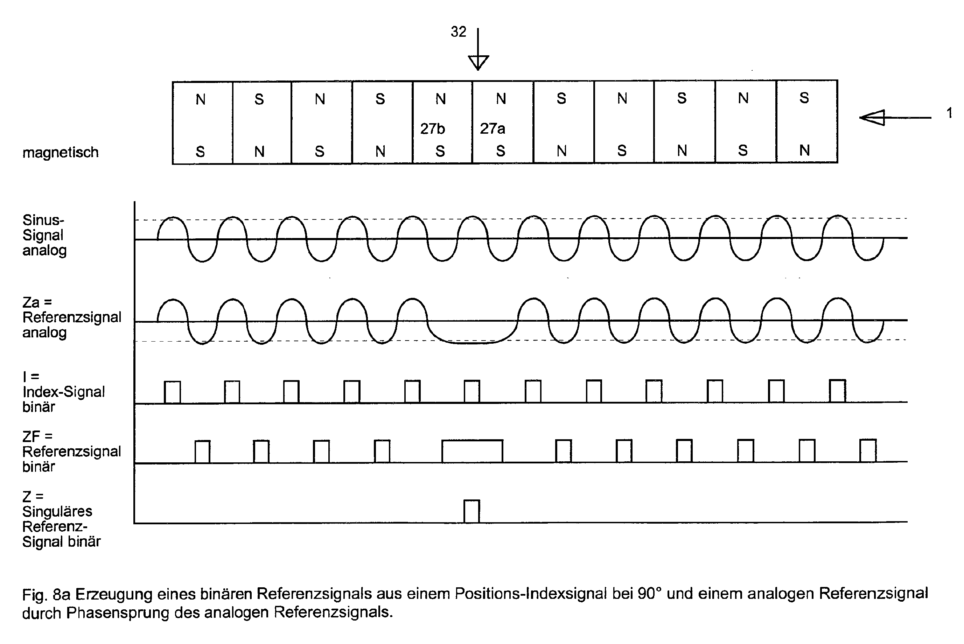

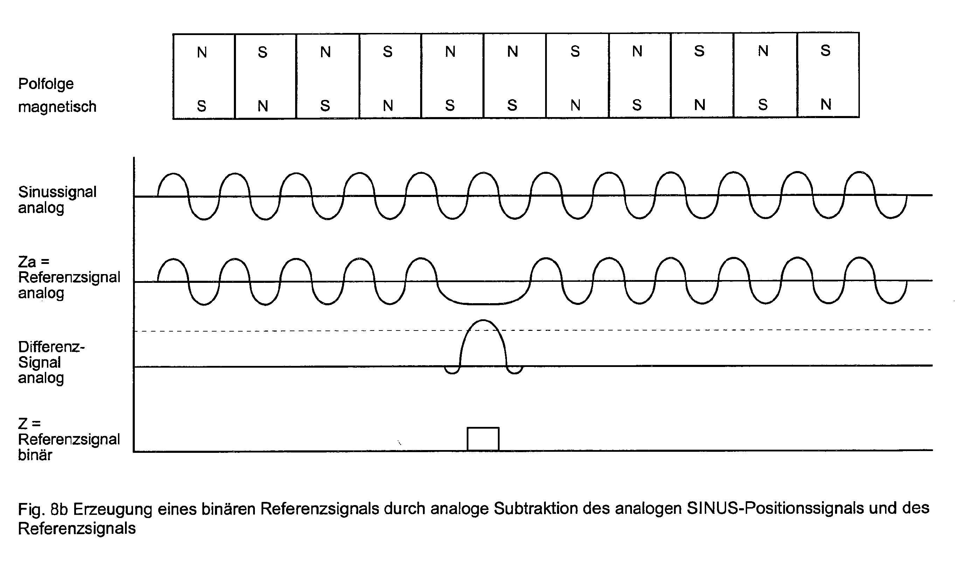

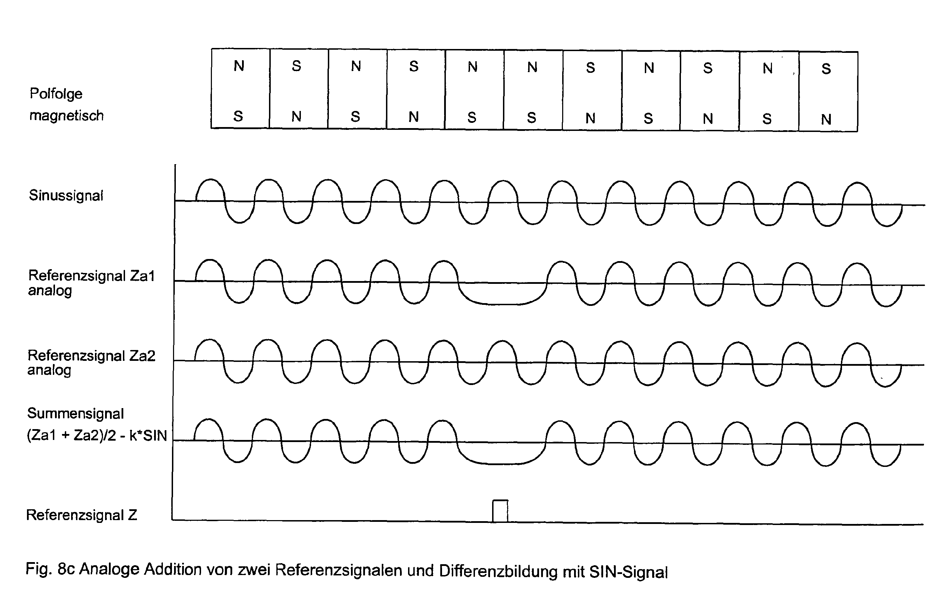

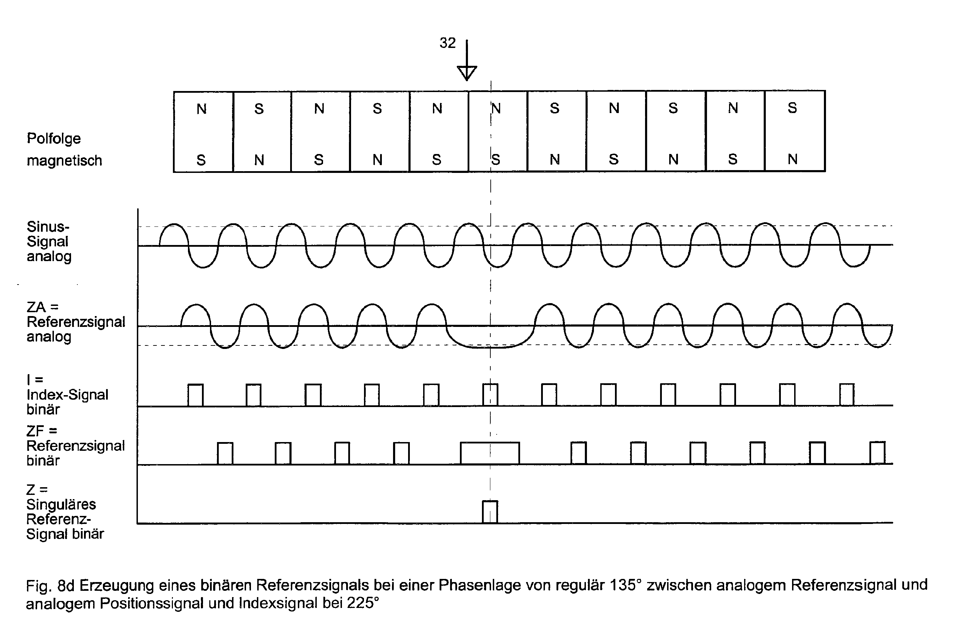

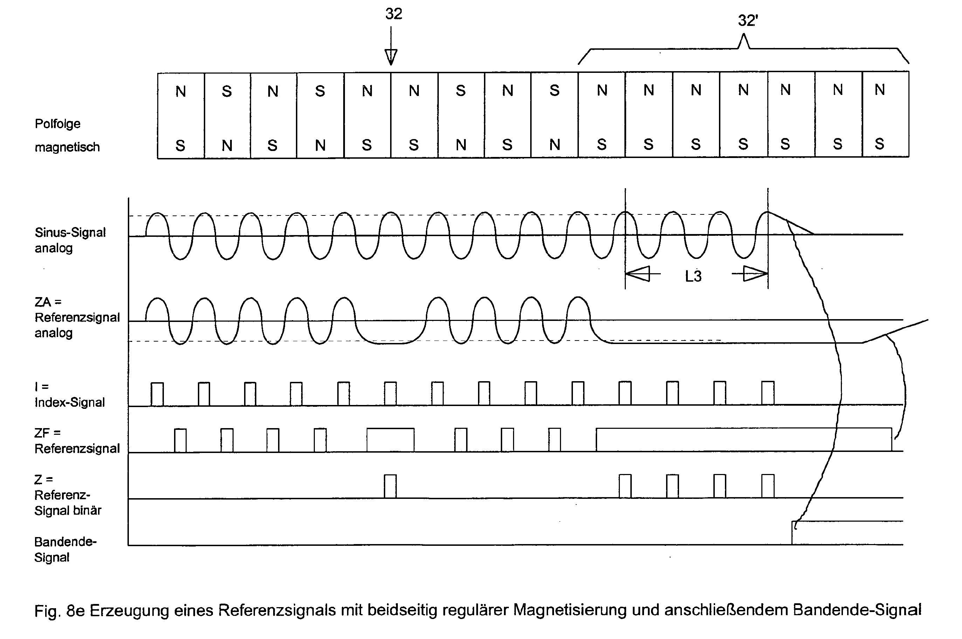

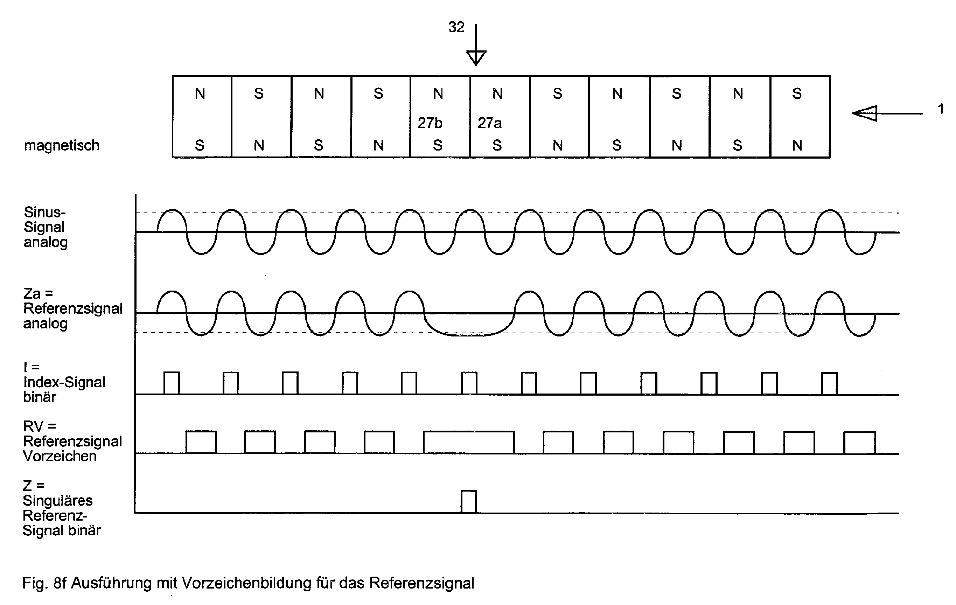

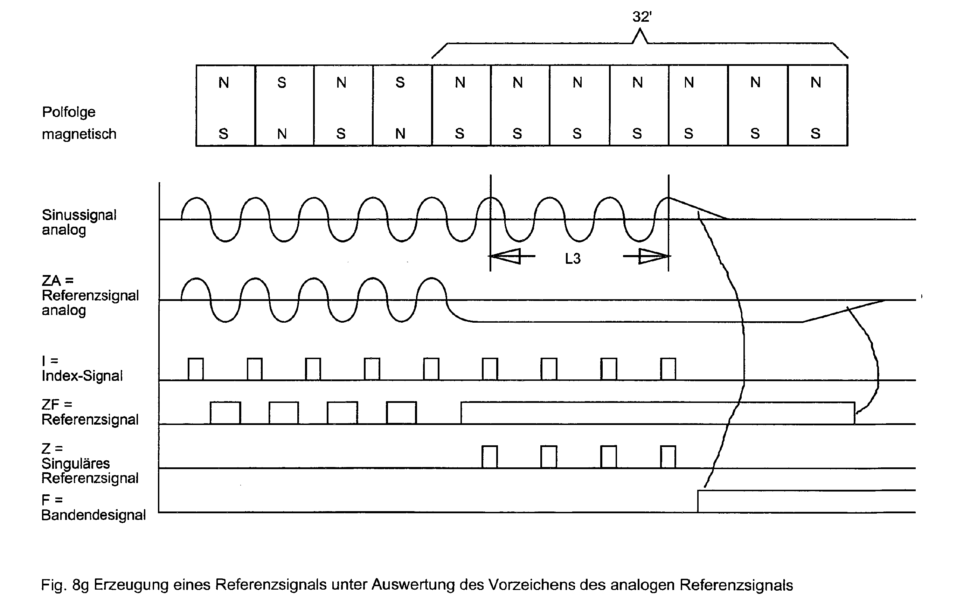

Die Figuren 8 zeigen die unterschiedlichen Stadien der Signalaufbereitung an der Stelle der Referenzmarke 32 eines Maßstabes 1, welche in zwei aufeinander folgenden, hinsichtlich zumindest ihrer Magnetisierungsrichtung und Orientierung identischen, aufeinander folgenden Segmenten 27a, 27b besteht.

Beim Überfahren der regelmäßig kodierten Bereiche des Maßstabes 1 erzeugt der Positionssensor 102 ― wie in Fig. 7 angedeutet ― zwei um z.B. 90° zueinander versetzte sinusartige Analogsignale, ein sogenanntes Sinussignal und ein sogenanntes Cosinussignal. Da der Positionssensor insgesamt vier Codierungen 27a, 27b, ... in Meßrichtung 10 überdeckt und gleichzeitig detektiert, werden diese Analogsignale, von denen beispielhaft das Sinussignal dargestellt ist, durch die unregelmäßige Codierung der Referenzmarke (Segmente 27a, 27b) kaum beeinflußt.

Die analogen Sinus- und Cosinussignale werden dem Interpolator 9b zugeführt, der aus diesem Signalpaar eine Impulsfolge digitaler, also binärer Signale in Form zweier um z.B. 90° versetzter binärer Ausgangssignale (z. B. Rechtecksignale), dem sogenannten A-Signal und B-Signal, wie beispielsweise in Fig. 5 als Rechtecksignale 29a, 29b dargestellt, erzeugt.

Bei 200facher Interpolation erzeugt also der Interpolator 200 Signalrechtecke bei z. B. dem A-Signal 29a pro einer einzigen Signalperiode des analogen Sinusoder Cosinussignals. Zusätzlich erzeugt der Interpolator ein binäres Indexsignal I, welches ein relatives Indexsignal ist und innerhalb einer Periode des analogen Sinus- oder Cosinussignals, also innerhalb eines einzigen Segmentes z. B. 27b der Codierung nur ein einziges Mal auftritt und dessen Länge gleich oder einem Teil einer Periode des binären A- oder B-Signals ist.

In Fig. 8a ist nur das Indexsignal I der binären Ausgangssignale dargestellt.

Der Referenzsensor 102' tastet dagegen immer nur eine einzige Codierung z. B. 27a, in Meßrichtung 10 ab und erzeugt dadurch ein zunächst analoges Referenzsignal Za, welches die doppelte Länge gleicher magnetischer Codierung an der Referenzmarke 32 durch eine entsprechende zeitliche Länge der positiven oder negativen Amplitude wiedergibt.

Nach Umwandlung in ein digitales Referenzsignal Zd äußert sich dies an der entsprechenden Stelle in einem Rechtecksignal vergrößerter Länge gegenüber den Rechtecksignalen, die anstelle normaler regulärer Codierung entstehen.

Aus den binären Indexsignalen I und Referenzsignalen Zd entsteht durch logische UND-Verknüpfung das singuläre, binäre Referenzsignal Z in Form eines einzigen Rechteckimpulses an der Stelle der Referenzmarke 32.

Dagegen zeigt Fig. 8b die Erzielung des binären Referenzsignales Z, indem das analoge Sinussignal vom analogen Referenzsignal Za subtrahiert und das so erhaltene analoge Differenzsignal zum binären Referenzsignal Z digitalisiert wird.

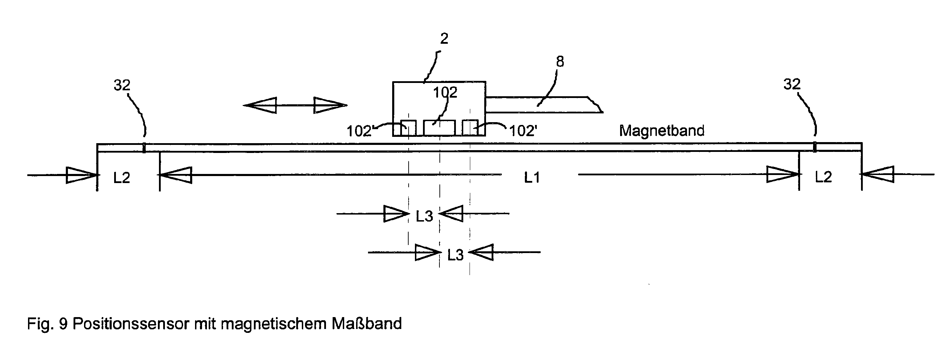

Fig. 8c zeigt die Erzielung eines singulären binären Referenzsignales Z mit einer Sensoreinheit 2, die ― wie in Fig. 9 dargestellt ― über zwei Referenzsensoren 102', 102" verfügt, die sich im selben, definierten Abstand L3 in Meßrichtung 10 vor und hinter dem Positionssensor 102 in der Sensoreinheit 2 befinden.

Die von den beiden Referenzsensoren 102', 102" erhaltenen analogen Referenzsignale Za1, von denen nur eines eine zeitliche Streckung einer Amplitude bei Erreichen einer der beiden Referenzmarkierungen 32 oder 32' aufweist, werden addiert und ― nach Halbierung der Summe ― davon ein definiertes Vielfaches des analogen Sinussignals subtrahiert. Hieraus ergibt sich wiederum ein analoges, singuläres Referenzsignal, wie in Fig. 8b dargestellt und nach Umwandlung in ein Binärsignal ein singuläres binäres Referenzsignal Z.

Sofern durch eine unregelmäßige Codierung auch keine geringfügige Veränderung des analogen Signals des Positionssensors hingenommen werden soll, besteht die Möglichkeit ― wie in Fig. 9 dargestellt ― die Referenzmarken 32 und/oder 32' außerhalb der für normale Meßvorgänge benötigten Meßlänge L1 in einem Überstand L2 anzuordnen, was jedoch die benötigte Gesamtlänge des Maßstabes 1 auf L1+L2 bzw. L1+2 x L2 verlängert, je nachdem, ob an einem oder an beiden Enden Referenzmarken als Nullpunktmarke und/oder als Maßstab-Ende-Marke, von denen eine auch gleichzeitig eine Nullpunktmarke sein kann, benötigt werden.

Bei der Vorgehensweise gemäß Fig. 8c sind die beiden analogen Referenzsignale Za1 und Za2 nicht phasenverschoben, und aufgrund der Kenntnis des Abstandes L3 vom Positionssensor 102, insbesondere dessen Mitte, zu den beiden Referenzsensoren 102', 102" um diesen Abstand L3 bereinigt. Dies bedeutet, daß die Phasenlage der Signale miteinander so verglichen wird, als ob sich Positionssensor und Referenzsensoren an der gleichen Längsposition innerhalb der Sensoreinheit befinden würden.

Bei der Vorgehensweise gemäß Figur 8d wird ― im Gegensatz zu Figur 8a ― ersichtlich, dass der Abstand L3 zwischen Positions- und Referenz-Sensor nicht notwendigerweise ein Vielfaches der Periodenlänge eines Sinus-Signals sein muss. Entsprechend ist das binäre Index-Signal I gegenüber dem analogen Sinusssignal, insbesondere dessen Null-Durchgang in die positive Richtung, um z.B. 225 Grad versetzt.

Figur 8e zeigt ― zusätzlich zur Situation der Figur 8a - rechts von der Referenzmarke 32 eine Maßstab-Ende-Marke 32', die aus so vielen hintereinander gleich orientierten Segmenten beziehungsweise Codierungen besteht, dass deren Länge größer ist als die Länge der vom Positionssensor überdeckten und gleichzeitig der detektierten Sinuswellen. In diesem Fall sind die Segmente innerhalb der Massstab-Ende-Marke 32' in gleicher Weise magnetisiert wie innerhalb der Referenzmarke 32.

Da in Vorwärts-Richtung, also in Laufrichtung auf die Maßstab-Ende-Marke 32' zu, der Positionssensor 102 gegenüber dem Referenzsensor 102 zurückversetzt ist, endet das die Position wiedergebende analoge Sinus-Signal erst innerhalb der Marke 32' nach einigen Segmenten entsprechend des Abstandes L3, während das analoge Referenzsignal bereits ab dem tatsächlichen Beginn der Maßstab-Ende-Marke 32' einen bleibenden negativen Ausschlag beibehält, der gegen Ende der Maßstab-Ende-Marke 32 auf Null zurückfällt.

Entsprechend ergibt sich ein singuläres Referenzsignal ZF, welches an der Marke 32 ein gegenüber den sonstigen Rechteck-Signalen verlängertes Rechtecksignal aufweist und an der Stelle der Marke 32' ein demgegenüber nochmals verlängertes Rechteck-Signal, deren Länge annähernd der Länge der Maßstab-Ende-Marke 32' entspricht.

Damit entsteht durch Umwandlung des singulären Referenzsignals ZF in binäre Referenzsignale Z nur ein derartiges binäres Referenzsignal an der Stelle der Marke 32, dagegen mehrere hintereinander folgende binäre Signale im Bereich der Marke 32'.

Zusätzlich kann ein binäres Maßstab-Ende-Signal in Form eines Rechtecksignales direkt aus dem analogen Sinussignal des Positionssensors dergestalt erzeugt werden, dass das Rechtecksignal erst auftritt nach Abklingen der analogen Sinusschwingung, sodass neben dem primären Referenzsignal Z ein zweites Maßstab-Ende-Signal zu Kontrollzwecken zur Verfügung steht.

Figur 8f zeigt die Bildung des binären Referenzsignals ZF durch Bildung des Vorzeichens des analogen Referenzsgnals Za. Dies kann durch einen Schwellwert-Vergleich mit dem Mittelwert von Za erfolgen.

Figur 8g entspricht der Signalbildung bei einem Maßstab-Ende-Signal 32' der Figur 8e, jedoch ohne eine in Laufrichtung vorhergehendende Referenz-Marke 32.

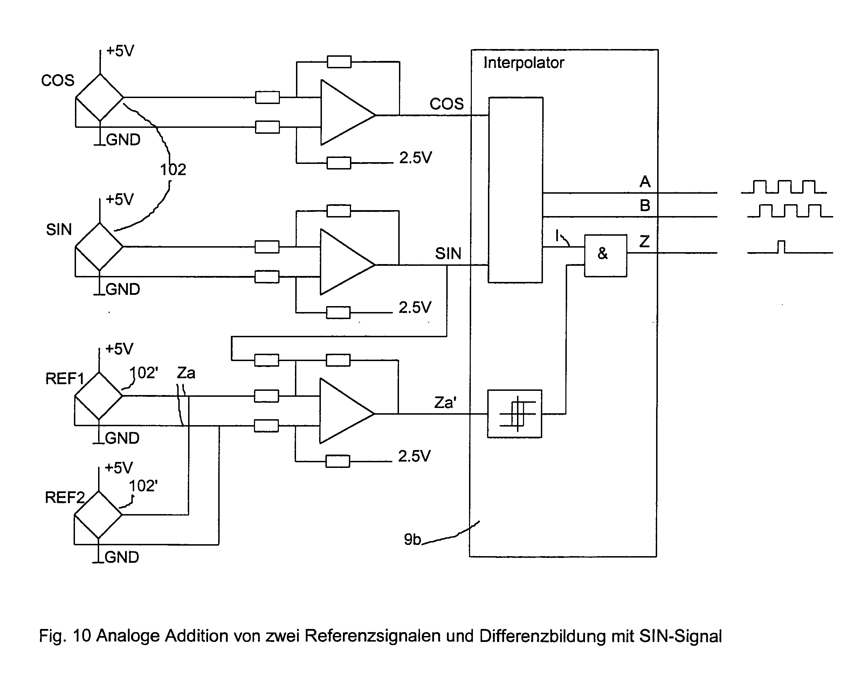

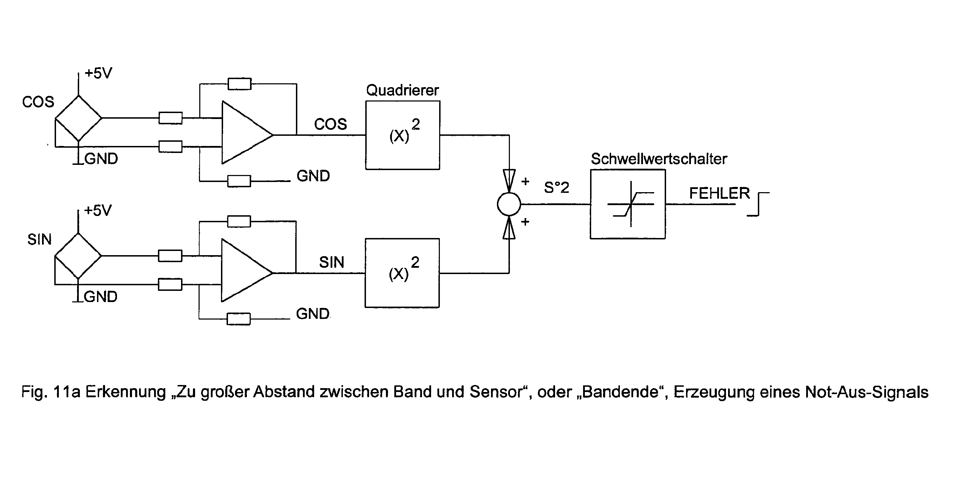

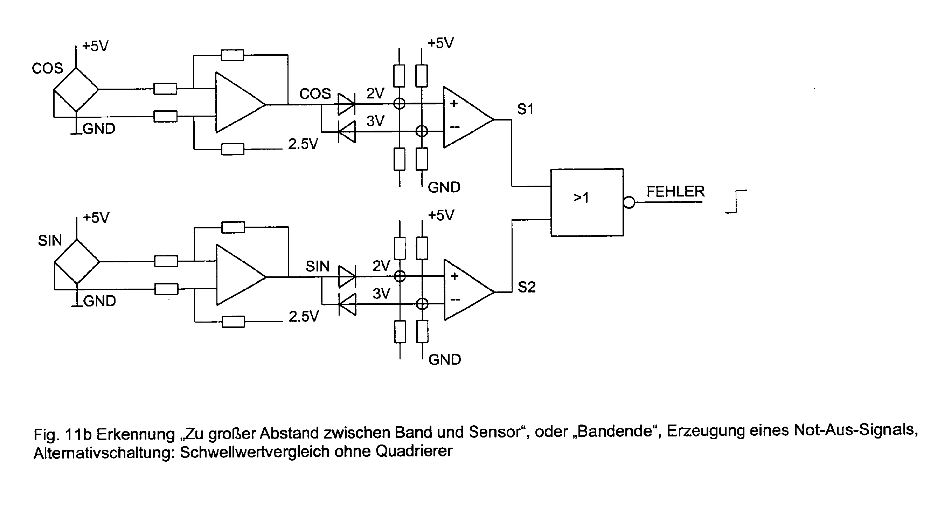

Die Figuren 10 und 11 zeigen beispielhafte Schaltungen zum Erzeugen der analogen Sinus-beziehungsweise Cosinus-Signale A, B sowie des absoluten, binären Referenz-Signals Z.

Fig. 10 zeigt eine Schaltungsanordnung zur Bearbeitung der von der Sensoreinheit 2 erzeugten Ausgangssignale. Das Meßausgangssignal der Sensoreinheit 2 besteht aus einem Cosinus- und einem Sinussignal, die jeweils über eine Brükkenschaltung und einen Verstärker dem Interpolator 9b zugeführt werden.

Dort wird ein analoges Referenzsignal Za' gebildet durch Subtraktion oder Addition des vom Referenz-Sensor 102' ausgegebenen analogen Signals Za und des vom Positionssensor 102 ausgegebenen analogen Sinus-Signals. Die Bildung eines binären Referenzsignals ZF durch Schwellwert-Vergleich und die logische Verknüpfung mit dem Indexsignal I erfolgen im Interpolator 9b, der das entstehende binäre singuläre Referenz-Signal Z neben den binären Positionssignalen A und B zur Weiterverarbeitung durch eine hier nicht gezeigte Zähleinheit über das Kabel ausgibt.

Fig. 11a zeigt eine Schaltungsanordnung, mittels der ein Fehlersignal erzeugt werden kann, wenn der Abstand zwischen der Sensoreinheit und der Meßstrecke einen Sollwert überschreitet.

Die von der Sensoreinheit abgegebenen Sinus- und Cosinussignale werden wiederum über eine Brückenschaltung und einen Verstärker jeweils einem Quadrierer zugeführt, die ein Sinusquadrat- bzw. ein Cosinusquadrat-Signal abgeben, die über einen Addierer einem Schwellwertschalter zugeführt werden.

Im Normalfall ergibt die Addition aus Sinusquadrat und Cosinusquadrat ein Signal konstanter Amplitude, das bei Abweichung von einem Sollwert den Schwellwertschalter auslöst.

Dieselbe Schaltungsanordnung kann auch dazu verwendet werden, den Anfang oder das Ende der Meßstrecke zu definieren, wenn also noch kein oder kein Meßsignal mehr ausgelöst wird, so daß dadurch der Schwellwertschalter ausgelöst werden kann.

Fig. 11b zeigt eine zu Fig. 11a in der Wirkung gleiche Schaltungsanordnung, bei der die Sinus- und Cosinussignale als Ausgangssignale der Sensoreinheit je einem Komparator zugeführt werden, der auf ein logisches ODER-Glied mit invertierendem Ausgang arbeitet. Erzeugt man z. B. pro Halbperiode des Sinus- und des Cosinussignals je ein Rechtecksignal, dann liegt bei richtigem Abstand zwischen Sensoreinheit und Meßstrecke zeitlich immer ein Rechteckimpuls vor. Bei größerem Abstand zwischen Sensoreinheit und Meßstrecke werden die Rechteckimpulse kürzer, bis schließlich Zeitperioden auftreten, in denen kein solcher Rechteckimpuls mehr vorliegt. Wenn dies geschieht, spricht das ODER-Glied an. Gleiches gilt selbstverständlich auch für den Anfang und das Ende der Meßstrecke.

Die Schaltung-Anordnungen zur Erzeugung eines Fehler-s Signals nach Figur 11a, b sind alternativ auch als Bestandteil des Interpolation-Schaltkreises 9b auf dem gleichen Halbleiter-Chip integriert.

Der BrückenWiderstand in der Brücken-Schaltung des Positionssensorelements, insbesondere gemäß den Figuren 11a, b, beträgt dabei mindestens 3 kOhm, vorzugsweise mindestens 10 kOhm, vorzugsweise mindestens 100 kOhm, vorzugsweise mindestens1000 kOhm, wobei die Brücken-Spannung vorzugsweise wenigstens 1,5 V, vorzugsweise mindestens 3,3V, vorzugsweise mindestens 5V beträgt.

Bei einem hohen Brücken-Widerstand und niedriger Versorgungsspannung ergibt sich der Vorteil, dass auf Grund des niedrigen Stromverbrauches das gesamte Gerät mittels Batterie betrieben werden kann.

Bei einem niedrigen Brückenwiderstand und hoher Versorgungs-Spannung besteht dagegen der Vorteil darin, dass die Anordnung robust gegen elektromagnetische Stör-Beeinflussung ist.

### BEZUGSZEICHENLISTE

- 1: Meßstab
- 2: Sensoreinheit
- 2a: Sensor
- 4: erster Chip
- 5: zweiter Chip
- 6: Kontaktiereinheit
- 6a,b: Kontaktpunkte
- 7: Programmiereinheit
- 8: dritter Chip
- 9a: Wandler
- 9b: Interpolator
- 9c: Ausgabeeinheit
- 10: Meßrichtung
- 11: Querrichtung
- 12: Lotrechte zur Meßstabebene
- 13a,b: Platine
- 13': flexible Platine
- 14: Kabel
- 15: Frontfläche
- 16a, b: Spur
- 17a,b: Frontkante
- 19a,b: Rückkante
- 20: Fortsatz
- 21: Vergußmasse
- 22: Form
- 23: Auflager
- 24: Kontaktöffnungen
- 25: Leuchtdiode
- 26: Anschlag
- 27a,b: Segmente
- 28: Signal
- 29a,b: Rechteck-Signal
- 30: Digitalanzeige
- 31: Computer
- 32: Referenzmarke
- 33a,b: Stirnwände
- 35: Rückseite
- 36a,b: Stirnflächen
- 37: Einbuchtungen
- 38a,b: Vorsprung
- 39a,b,c: Bohrungen
- 40a,b,c: Bohrungen
- 41: Varistor
- 42: Induktivität
- 43: Widerstand
- 44: Diode
- 45: Filterelemente
- 46: Kappdiode
- 47: Kappdiode
- 50: Kapazität
- L1: Meßlänge
- L2: Überstand
- L3: Abstand

- A, B: analoge Sinus- bzw. Cosinussignale
- I: digitales Indexsignal
- F: Fehlersignal
- Z: absolutes, binäres Referenzsignal

## Patentansprüche

1. Längenmessvorrichtung mit
- einem Maßstab (1), der in Messrichtung (10) abwechselnd codiert ist,
- einer Sensoreinheit (2), die in Messrichtung (10) relativ zum Maßstab (1) bewegbar ist und wenigstens einen Sensor (2a) zum berührungslosen Detektieren von magnetisch modulierten analogen Signalen umfasst,
- einer Elektronik (9), die wenigstens
- einen Interpolator (9b) zum einstellbaren Unterteilen der Teilungs-Abstände des digitalen Signals gegenüber derjenigen des analogen Signals um einen vielfachen Faktor und
- eine Leitungstreiberschaltung (9d) zum Verbessern der Übertragungsfähigkeit des digitalen Signales
- eine Ausgabeeinheit (9c) zum Ausgeben der vom Interpolator (9b) abgegebenen digitalen Signale
umfasst,
**dadurch gekennzeichnet, dass**
der Interpolator (9b) und die Leitungstreiberschaltung (9d) in der Sensoreinheit (2) angeordnet ist.

2. Längenmessvorrichtung mit
- einem Maßstab (1), der in Messrichtung (10) abwechselnd codiert ist,
- einer Sensoreinheit (2), die in Messrichtung (10) relativ zum Maßstab (1) bewegbar ist und wenigstens einen Sensor (2a) zum berührungslosen Detektieren von magnetisch modulierten analogen Signalen umfasst,
- einer Elektronik (9), die wenigstens
- einen Interpolator (9b) zum einstellbaren Unterteilen der Teilungs-Abstände des digitalen Signals gegenüber derjenigen des analogen Signals um einen vielfachen Faktor und
- eine Leitungstreiberschaltung (9d) zum Verbessern der Übertragungsfähigkeit des digitalen Signales
- eine Ausgabeeinheit (9c) zum Ausgeben der vom Interpolator (9b) abgegebenen digitalen Signale
umfasst,
**dadurch gekennzeichnet, dass**
in der Sensoreinheit (2) die Elektronik (9) eine Schutzbeschaltung zum Schutz der elektronischen Bauelemente der Elektronik (9) vor Überlastung durch zu hohe Spannungen und/oder Strömen umfasst.

3. Vorrichtung nach Anspruch 2,
**dadurch gekennzeichnet, dass**
- die Schutzbeschaltung auch gegen eine falsche Polung der Ausgabeeinheit (9c) schützt, und/oder insbesondere
- die Schutzbeschaltung Bestandteil des Interpolators (9b) und/oder des Leistungstreibers (9d) und/oder eines Spannungsreglers ist, und/oder insbesondere
- die Schutzbeschaltung strombegrenzende Impedanzen und/oder Ablaitungselemente zum Ableiten von Überspannungen und/oder spannungsbegrenzende Bauelemente umfaßt, und/oder insbesondere
- die einstellbaren Parameter, insbesondere der Unterteilungs-Faktor, des Interpolators (9b) auch nach der verwendungsfähigen Fertigstellung der Sensoreinheit (2) noch einstellbar ist.

4. Vorrichtung nach einem der vorhergehenden Ansprüche,
**dadurch gekennzeichnet, dass**
- der Interpolator (9b) einen programmierbaren ersten Chip (4) umfasst sowie eine Kontaktiereinheit (6), um durch Anschließen einer Programmiereinheit (7) den ersten Schaltkreis, insbesondere Chip (4), insbesondere zwecks Veränderung des Faktors, neu programmieren zu können, und/oder insbesondere
- die Kontaktiereinheit (6) auch nach der verwendungsfähigen Fertigstellung der Sensoreinheit (2) zugänglich ist, und/oder insbesondere
- die Kontaktiereinheit (6) separat von der Ausgabeeinheit (9c), insbesondere deren elektrischen Kontakten, ausgebildet und insbesondere innerhalb der Sensoreinheit (2) angeordnet ist, und/oder insbesondere
- die Kontaktiereinheit (6) als Teil der Ausgabeeinheit (9c), insbesondere deren elektrischen Kontakten, ausgebildet istund der Interpolator insbesondere über das Kabel der Ausgabeeinheit programmierbar bleibt.

5. Messvorrichtung nach einem der vorhergehenden Ansprüche,
**dadurch gekennzeichnet, dass**
- die Leitungstreiberschaltung (9d) einen zweiten Schaltkreis, insbesondere Chip (5) umfasst, und/oder insbesondere
- der Sensor (2a) als dritter Schaltkreis, insbesondere Chip (8) ausgebildet ist und innerhalb der Sensoreinheit (2) als nackter Chip verbaut ist.

6. Längenmessvorrichtung mit
- einem Maßstab (1), der in Messrichtung (10) abwechselnd codiert ist,
- einer Sensoreinheit (2), die in Messrichtung (10) relativ zum Maßstab (1) bewegbar ist und wenigstens einen Sensor (2a) zum berührungslosen Detektieren von magnetisch modulierten analogen Signalen umfasst,
- einer Elektronik (9), die wenigstens
- einen Interpolator (9b) zum einstellbaren Unterteilen der Teilungs-Abstände des digitalen Signals gegenüber derjenigen des analogen Signals um einen vielfachen Faktor und
- eine Leitungstreiberschaltung (9d) zum Verbessern der Übertragungsfähigkeit des digitalen Signales
- eine Ausgabeeinheit (9c) zum Ausgeben der vom Interpolator (9b) abgegebenen digitalen Signale
umfasst,
**dadurch gekennzeichnet, dass**
- die Sensoreinheit (2) wenigstens eine Platine (13a..) mit elektronischen Komponenten umfasst, die in der Sensoreinheit (2) in einer nicht zur Ebene des Maßbandes (1) parallelen Lage und damit auch in einer nicht zur Frontfläche (15) der Sensoreinheit (2) parallelen Lage angeordnet ist, und/oder insbesondere
- die Platine (13a) parallel zur Messrichtung (10) in der Sensoreinheit (2) angeordnet ist, und/oder insbesondere
- die Platine (13a) unter einem spitzen Winkel zur Messrichtung (10) in der Sensoreinheit (2) angeordnet ist und insbesondere die Sensoreinheit (2) nicht breiter ist als die Querrichtung (11) des Maßstabes (1), und/oder insbesondere
- der Maßstab (1) mehrere in Querrichtung (11) nebeneinander liegende Spuren (16a,b..) umfasst, die insbesondere alle abwechselnd magnetisiert sind, der Teilungsabstand der einzelnen Spuren (16a,b..) jedoch unterschiedlich ist, und die Sensoreinheit (2) mehrere Sensoren (2a,b..) entsprechend der Anzahl der Spuren (16a,b..) umfasst und jeder der Sensoren (2a,b..) auf einer separaten starren Platine (13a,b..) an deren Frontkante (17a,b..) angeordnet ist, und/oder insbesondere
- die starren Platinen (13a,b..) über flexible Leiter, insbesondere wenigstens eine flexible Platine (13'), alle flexibel zu einer vorgefertigten Baueinheit verbunden sind, und/oder insbesondere
- die flexiblen Leiter, insbesondere die flexible Platine (13'), von der von der Frontkante (17a,b..) abgewandten Rückkante (19a,b) jeder Platine (13a,b..) aus abstreben, und/oder insbesondere
- die Kontaktpunkte (6a,b..) der Kontaktiereinheit (6) auf einem über die sonstige Rückkante (19a) einer Platine (13a) hinausragenden Fortsatz (20) angeordnet sind, und/oder insbesondere
- wenigstens einer, insbesondere alle innerhalb der Sensoreinheit (2) verwendeten Schaltkreise, insbesondere Chips (4,5,8 bzw. 8a,b) als nackte Chips verwendet sind, und/oder insbesondere
- die Schaltkreise, insbesondere Chips auf den Platinen mittels Bonding, also insbesondere Vorfixieren mittels Klebung und anschließendes elektrisches Kontaktieren mittels Löten, oder mittels der Flip-Chip-Technik, befestigt und elektrisch angeschlossen sind.

7. Längenmessvorrichtung mit
- einem Maßstab (1), der in Messrichtung (10) abwechselnd codiert ist,
- einer Sensoreinheit (2), die in Messrichtung (10) relativ zum Maßstab (1) bewegbar ist und wenigstens einen Sensor (2a) zum berührungslosen Detektieren von magnetisch modulierten analogen Signalen umfasst,
- einer Elektronik (9), die wenigstens
- einen Interpolator (9b) zum einstellbaren Unterteilen der Teilungs-Abstände des digitalen Signals gegenüber derjenigen des analogen Signals um einen vielfachen Faktor und
- eine Leitungstreiberschaltung (9d) zum Verbessern der Übertragungsfähigkeit des digitalen Signales
- eine Ausgabeeinheit (9c) zum Ausgeben der vom Interpolator (9b) abgegebenen digitalen Signale
umfasst,
**dadurch gekennzeichnet, dass**
- die innerhalb der Sensoreinheit (2) angeordneten Teile der Elektronik (9) auf wenigstens einer Platine (13a) angeordnet und mittels einer aushärtenden Vergussmasse (21) umschlossen ist, und/oder insbesondere
- die Elektronik (9) der Sensoreinheit (2) von der Vergussmasse (21) vollständig umschlossen ist, und/oder insbesondere
- die Vergussmasse (21) ein Polymer, insbesondere ein Elastomer, insbesondere ein Thermoplast ist, und/oder insbesondere
- die Sensoreinheit (2) gehäuselos ist, also über die Umhüllung aus Vergussmasse (21) hinaus keine weitere, insbesondere feste, Umhüllung, aufweist.

8. Vorrichtung nach einem der vorhergehenden Ansprüche,
**dadurch gekennzeichnet, dass**
- die Elektronik (9) eine Kontaktiereinheit (6) innerhalb der Sensoreinheit (2) umfasst, deren Kontaktpunkte (6a) ebenfalls von der Vergussmasse (21) abgedeckt, jedoch mittels von außen durch die Vergussmasse (21) eindringende Kontaktspitzen kontaktierbar sind, und/oder insbesondere
- die Elektronik (9) eine Kontaktiereinheit (6) mit Kontaktpunkten (6a,b..) innerhalb der Sensoreinheit (2) umfasst, und das Umhüllen der Elektronik (9) mittels Vergussmasse (21) in einer Form (22) geschieht, innerhalb der die wenigstens eine feste Platine (13a) der Elektronik (9) auf Abstand zur Außenwand der Form (22) mittels stiftförmiger, gegen die Platine (13a) ragender, Auflager (23) mit möglichst geringem Querschnitt gehalten wird, und die Auflager (23) insbesondere an der Stelle der Kontaktpunkte (6a,b..) der Kontaktiereinheit (6) angeordnet sind und sich auf diesen abstützen, um so in der späteren Umhüllung aus Vergussmasse (21) Kontaktöffnungen (24) in der Vergussmasse (21) zu schaffen, und/oder insbesondere
- die Sensoreinheit (2) wenigstens einen optischen und/oder akustischen Indikator, insbesondere einen optischen Indikator in Form wenigstens einer Leuchtdiode (25) aufweist, und/oder insbesondere
- der optische und/oder akustische Indikator an der Sensoreinheit (2) ein Nullstellungs-Indikator ist, der anzeigt, wenn sich die Sensoreinheit an der Nullstellung des Maßstabes, insbesondere dessen Referenzmarke, befindet, und/oder insbesondere
- der Indikator ein Fehler-Indikator ist, der anzeigt, wenn die Sensoreinheit (2) fehlerhaft ist, beispielsweise aufgrund zu großem Abstandes vom Maßband oder zu hoher Verfahrgeschwindigkeit.

9. Vorrichtung nach einem der vorhergehenden Ansprüche,
**dadurch gekennzeichnet, dass**
- Leuchtdioden (25) als Indikatoren im Inneren der Sensoreinheit (2) so angeordnet sind, daß sie aus wenigstens 2 um 90° beabstandeten Blickrichtungen sichtbar sind, insbesondere im Bereich der rückseitigen Ecken der Sensoreinheit (2), insbesondere abgedeckt unter einer transparenten Abdekkung, insbesondere einer transparenten Kabeleinführungstülle, und/oder insbesondere
- Leuchtdioden als Indikatoren an bzw. in der Unterseite der Sensoreinheit (2), abgedeckt höchstens von transparentem Material, angeordnet sind, so daß deren Leuchten durch Reflexion auf dem das Magnetband abdeckenden Edelstahlband sichtbar ist, und/oder insbesondere
- eine separate Referenzmarke, welche Bestandteil des Maßstabes (1) ist und in Meßrichtung (10) gegenüber einer der anderen Spuren (16 a ...) des Maßstabes (1) frei positionierbar ist, einen Anschlag (26) für die Sensoreinheit (2) in Meßrichtung (10) aufweist, um mit der Sensoreinheit (2) an einer definierten Stelle in Meßrichtung (10) positionierbar zu sein.

10. Längenmeßvorrichtung mit
- einem Maßstab (1), der in Meßrichtung (10) regelmäßig, insbesondere abwechselnd codiert ist,
- einer Sensoreinheit (2), die in Meßrichtung (10) relativ zum Maßstab (1) bewegbar ist und wenigstens einen Sensor zum berührungslosen Detektieren von magnetisch modulierten analogen Signalen umfaßt,
- einer Elektronik (9) zum Auswerten der Signale des wenigstens einen Sensors
**dadurch gekennzeichnet, daß**
- die Sensoreinheit (2) wenigstens einen Positions-Sensor (102) und einen Referenz-Sensor (102') zum berührungslosen Detektieren von magnetisch modulierten analogen Signalen umfaßt, wobei die Sensoren (102, 102') in Meßrichtung (10) hintereinander in einem definierten Sensor-Abstand (L3) zueinander angeordnet sind,
- der Maßstab (1) die Referenzmarke (32) in seiner in Meßrichtung (10) definiert regulär codierten Zähl-Spur (16) integriert hat, und/oder insbesondere
- die Sensoreinheit (2) so ausgebildet ist, daß beim Überfahren der Referenzmarke (32) durch die Sensoren (102, 102') unterschiedliche analoge Signale von diesen abgegeben werden, und insbesondere die Ausbildung der Sensoreinheit (2) zum Erzielen unterschiedlicher Signale beim Überfahren der Referenzmarke (32) in der unterschiedlichen Ausbildung der beiden Sensoren (102, 102') liegt, und/oder insbesondere
- die Elektronik (9) wenigstens
- einen Interpolator (9b) zum einstellbaren Unterteilen der Teilungs-Abstände des digitalen Signals gegenüber derjenigen des analogen Signals um einen vielfachen Faktor und
- eine Leitungstreiberschaltung (9d) zum Verbessern der Übertragungsfähigkeit des digitalen Signals, und
- eine Ausgabeeinheit (9c) zum Ausgeben der vom Interpolator (9b) abgegebenen digitalen Signale
umfaßt, und/oder insbesondere
- die Sensoreinheit (2) so ausgebildet ist, daß beim Überfahren der Referenzmarke (32) durch die Sensoren (102, 102') unterschiedliche analoge Signale von diesen abgegeben werden, und insbesondere die Ausbildung der Sensoreinheit (2) zum Erzielen unterschiedlicher Signale beim Überfahren der Referenzmarke (32) darin besteht, dass der Interpolator (9b) die analogen Signale der beiden Sensoren (102, 102') unterschiedlich weiterverarbeitet, und/oder insbesondere
- sich Positionssensor (102) und Referenzsensor (102') über unterschiedliche Anzahlen von einzelnen Codierungen des Maßstabes (1) in Meßrichtung (10) erstrecken, insbesondere sich der Referenz-Sensor (102') nur über die Länge einer einzigen Codierung erstreckt und der Positionssensor (102) sich über die Länge von vier Codierungen erstreckt.

11. Vorrichtung nach einem der vorhergehenden Ansprüche,
**dadurch gekennzeichnet, daß**
- der Maßstab (1) gleich lange Codierungen in Form von quer zur Meßrichtung (10) liegenden einzelnen Magnetisierungen aufweist, die in Meßrichtung (10) hintereinander abwechselnd den Nordpol oder den Südpol der einen Längskante des Maßstabes (1) zugeordnet aufweisen, und/oder insbesondere
- die Referenzmarke (32) eine Nullpunkt-Marke ist, und/oder insbesondere
- die Referenzmarke (32', 32") eine Maßstab-End-Marke ist, und/oder insbesondere
- als Referenzmarke (32, 32', 32") in der abwechselnden Abfolge von gegensätzlich orientierten magnetischen Codierungen eine Codierung um 180° gegensätzlich zu ihrer in der regelmäßigen Abfolge vorkommenden Soll-Codierung codiert ist, also eine ungerade Anzahl, insbesondere drei, hintereinander abfolgende gleich orientierte Codierungen auf dem Maßstab (1) vorhanden sind, und/oder insbesondere
- als Referenzmarke (32, 32', 32") in der abwechselnden Abfolge von gegensätzlich orientierten magnetischen Codierungen eine gerade Anzahl, insbesondere von zwei, hintereinander abfolgend gleich orientierten Codierungen auf dem Maßstab (1) vorhanden sind.

12. Vorrichtung nach einem der vorhergehenden Ansprüche,
**dadurch gekennzeichnet, daß**
- das Ausgangssignal des Positionssensors (102) eine Mittelwertbildung über mehrere aufeinander folgende Codierungen hinweg beeinhaltet und die durch die Referenzmarke (32) bewirkte Unregelmäßigkeit in der Abfolge von Codierungen dadurch in ihrem Einfluß auf das abgegebene analoge Signal des Positionssensors (102) so gering ist, daß das aus diesem analogen Signal abgeleitete binäre Signal, insbesondere Rechtecksignal (29a, 29b), sich auch im Bereich der Referenzmarke (32) unverändert fortsetzt, und/oder insbesondere
- die Sensoreinheit (2) sowohl in positiver als auch in negativer Meßrichtung (10) im selben Abstand (L3) vom Positionssensor (102) jeweils einen Referenzsensor (102') aufweist, und/oder insbesondere
- die Maßstab-Ende-Markierung eine Anzahl von gleich orientierten Codierungen hintereinander umfaßt, die größer ist als die Anzahl gleich orientierter Codierungen bei der Nullpunkt-Marke, und/oder insbesondere
- die Auswerteschaltung eine Führungsfehler-Erkennung zum Erkennen einer zu großen Distanz zwischen Sensoreinheit (2) und Maßstab (1) umfaßt, die insbesondere einen Quadratsummenbildner oder einen Betragsdiskriminator und eine logische Verknüpfung der binären Teilsignale des Positionssensors (102) umfaßt.

13. Längenmeßvorrichtung mit
- einem Maßstab (1), der in Meßrichtung (10) regelmäßig, insbesondere abwechselnd codiert ist,
- einer Sensoreinheit (2), die in Meßrichtung (10) relativ zum Maßstab (1) bewegbar ist und wenigstens einen Sensor zum berührungslosen Detektieren von magnetisch modulierten analogen Signalen umfaßt,
- einer Elektronik (9) zum Auswerten der Signale des wenigstens einen Sensors
**dadurch gekennzeichnet, daß**
- die Sensoreinheit (2) wenigstens einen Positions-Sensor (102) und einen Referenz-Sensor (102') zum berührungslosen Detektieren von magnetisch modulierten analogen Signalen umfaßt, wobei die Sensoren (102, 102') in Meßrichtung (10) hintereinander in einem definierten Sensor-Abstand (L3) zueinander angeordnet sind,
- der Maßstab (1) die Referenzmarke (32) in einer separaten, parallel zur zählt-Spur verlaufenden, definierte reguläre codierten Referenz-Spur integriert hat.

14. Verfahren zum Herstellen und Montieren einer Längenmeßvorrichtung mit
- einem Maßstab (1), der in Meßrichtung (10) abwechselnd codiert ist,
- einer Sensoreinheit (2), die in Meßrichtung (10) relativ zum Maßstab (1) bewegbar ist und wenigstens einen Sensor zum berührungslosen Detektieren von magnetisch modulierten analogen Signalen umfaßt,
**dadurch gekennzeichnet, daß**
der Maßstab (1) erzeugt wird durch
- Ablängen eines endlos regulär, insbesondere abwechselnd, magnetisch kodierten Maßbandes, und
- Aufbringen einer oder mehrerer Referenzmarken (32, 32', 32''') durch Überschreiben wenigstens einer der regulären magnetischen Codierungen durch eine magnetische Codierung mit demgegenüber vertauschtem Nord- und Südpol (180° Phasenwechsel), und/oder insbesondere
- das Einbringen der Referenzmarken in den Maßstab (1) nach Anordnen des Maßstabes (1) am Anwendungsobjekt erfolgt, und/oder insbesondere
- das Anbringen mittels eines Magnetisierungskopfes, welcher insbesondere einen Dauermagneten umfaßt, erfolgt und dabei der Magnetisierungskopf in definierter Relativlage an der in Meßrichtung (10) entlang des Maßstabes (1) verfahrbaren Sensoreinheit (2) erfolgt, welche insbesondere dabei bereits ebenfalls am Anwendungsobjekt befestigt ist.
